(19) Europäisches Patentamt
European Patent Office
Office européen des brevets

(11) Publication number: 0 211 600 B1

(12) EUROPEAN PATENT SPECIFICATION

(45) Date of publication of patent specification: 03.10.90

(51) Int. Cl.[5]: C 08 G 59/02, C 09 D 163/02

(21) Application number: 86305823.6

(22) Date of filing: 29.07.86

# (54) Polyol resins and coating compositions containing same.

(30) Priority: 29.07.85 JP 167206/85
14.01.86 JP 4263/86
25.02.86 JP 39592/86

(43) Date of publication of application:
25.02.87 Bulletin 87/09

(45) Publication of the grant of the patent:
03.10.90 Bulletin 90/40

(84) Designated Contracting States:
DE FR GB

(56) References cited:
EP-A-0 044 816
US-A-4 316 003

(73) Proprietor: MITSUI SEKIYU KAGAKU KOGYO KABUSHIKI KAISHA
2-5 Kasumigaseki 3-chome Chiyoda-ku
Tokyo 100 (JP)

(72) Inventor: Yamamoto, Yohzoh
4-1 2-Chome Yohshudai-nishi
Ichihara-Shi Chiba-Ken (JP)
Inventor: Ishiwata, Syuichi
12-4 5-Chome Aobadai
Ichihara-Shi Chiba-Ken (JP)

(74) Representative: Holmes, Michael John et al
Frank B. Dehn & Co. Imperial House 15-19 Kingsway
London WC2B 6UZ (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 211 600 B1

Courier Press, Leamington Spa, England.

## Description

Field of the Invention

This invention relates to polyol resins and process for preparing the same. More particularly, the invention relates to polyol resins which not only exhibit excellent compatibility with petroleum or the like solvents, corrosive resistance, chemical resistance, adherence to substrate and flexibility but also have properties to inhibit bubbling at the time of their curing, and to coating compositions containing these polyol resins.

Technical Background of the Invention

It has been desired that ballast tanks of shipping, underground installation such as iron or steel piping or structures such as bridge pier are strongly corrosion resistant. On that account, the surface of these structures has heretofore been coated with anticorrosive paint, particulalry heavy duty anticorrosive coating of the thick film type. Such heavy duty anticorrosive coating widely used hitherto includes tar-epoxy or tar-urethane coating consisting of a combination of epoxy or polyol resin excellent in adherence to substrate, mechanical strength, chemical resistance, etc., and bituminous material excellent in water resistance.

However, the bituminous material which is black, per se, not colorable and lacks aesthetic appearance involved such problems that low molecular components contained therein sometimes bleed out on the surface of coating, whereby staining the surface of substrate in contact with said surface of coating or discoloring a topcoating provided on the coating for aesthetical purposes.

In order to solve such problems as referred to above, there are used coating materials comprising hydrocarbon resin known as white tar being colorless or light-colored instead of butuminous material in combination with epoxy resin or polyol resin. Because of poor compatibility of white tar with conventionally known epoxy resins or polyol resins, however the coating compositions obtained from combination as mentioned above had a great disadvantage that they are inferior in corrosion resistance to those comprising bituminous materials but not white tar.

So-called bisphenol-type epoxy resins which are prepared from bisphenols and epichlorohydrin or ß-methylepichlorohydrin are used for various purposes such as adhesives, film-forming coating materials, etc., utilizing reactivity of epoxy groups of the resins. Modified epoxy resins obtained by the ring opening of epoxy groups with active hydrogen containing compounds, on one hand, are used for the purpose of improving adhesive properties or corrosion resistance of melamine, phenol, alkyd, urethane and the like coatings, utilizing reactivity of hydroxyl groups of the resin.

It is known that the modified epoxy resins as referred to above greatly depend for their properties on the kind of active hydrogen containing compound used in modifying the epoxy resins. For instance, where modified epoxy resins are used in the field of urethane coating, isocyanate used as a hardener reacts with moisture contained in the coating components such as vehicle, filler and solvent or reacts with moisture present in air, with the result that bubbles are formed within coats formed from the urethane coatings. To inhibit this bubbling, it is known to increase a molecular weight of the resins used or use alkanolamine, etc. as a modifier for epoxy resins and introduce highly reactive hydroxyl groups into the epoxy resins thereby modified.

However, the modified epoxy resins obtained in this manner are poor in compatibility with aromatic compounds such as toluene, xylene, etc. commonly used as paint solvents and bring about various problems.

On one hand, in the modified epoxy resins obtained by using such a modifier as alkyl phenol or the like with the view of permitting of no presence of highly active hydroxyl groups in the low molecular resins used, there still remains such a problem that bubbles are formed within coats formed from modified epoxy resins.

We executed extensive researches with the view of obtaining modified epoxy resins which simultaneously satisfy such antinomic properties as good compatibility with aromatic compound solvents such as toluene and xylene and low bubbling property, and have eventually accomplished the present invention on the basis of our finding that polyol resins which are low in bubbling property, excellent in compatibility with aromatic compound solvents and also excellent in compatibility with hydrocarbon resins such as white tar are obtained by reacting bisphenol type epoxy resins with primary amines to effect chain length extension of said epoxy resins, ring opening the epoxy groups remaining in said epoxy resins with active hydrogen containing compounds, or esterifying with univalent carboxylic acids at least some of the hydroxyl groups of epoxy resin modification products having substantially no epoxy group, said modification products being obtained by reaction of bisphenol type epoxy resins with active hydrogen containing compounds reactive with epoxy group.

Objects of the Invention

The present invention is to solve such problems associated with the prior art as mentioned above.

Accordingly, a first object of the invention is to provide polyol resins comprising modified epoxy resins as base resins, said polyol resins being excellent in compatibility with solvents such as toluene and xylene and having inhibited bubbling property at the time of their curing.

A second object of the invention is to provide coating compositions comprising the above-mentioned polyol resins and hydrocarbon synthetic resins represented by white tar, said compositions being excellent in compatibility with solvents such as toluene and xylene, having inhibited bubbling property at the time of their curing and being optionally colorable in different tints and, moreover, being excellent in corrosion resistance as well as in water resistance.

Summary of the Invention

The polyol resin [A] in accordance with the present invention is a polyol resin which is obtained by reaction of a bisphenol type epoxy resin (a) as defined hereinafter with at least two out of the undermentioned components,

(i) at least one main chain extender (b) selected from primary amines, said extender (b) being capable of bringing about main chain extension reaction of said bisphenol type epoxy resin (a),

(ii) at least one active hydrogen containing compound (c) selected from among secondary amines, phenols and carboxylic acids, said compound (c) being capable of bringing about ring opening reaction of the terminal epoxy group of said bisphenol type epoxy resin (a), and

(iii) at least one univalent carboxylic acid (4) capable of esterifying the hydroxyl group of said bisphenol type epoxy resin, said resin (a) being of general formula (I)

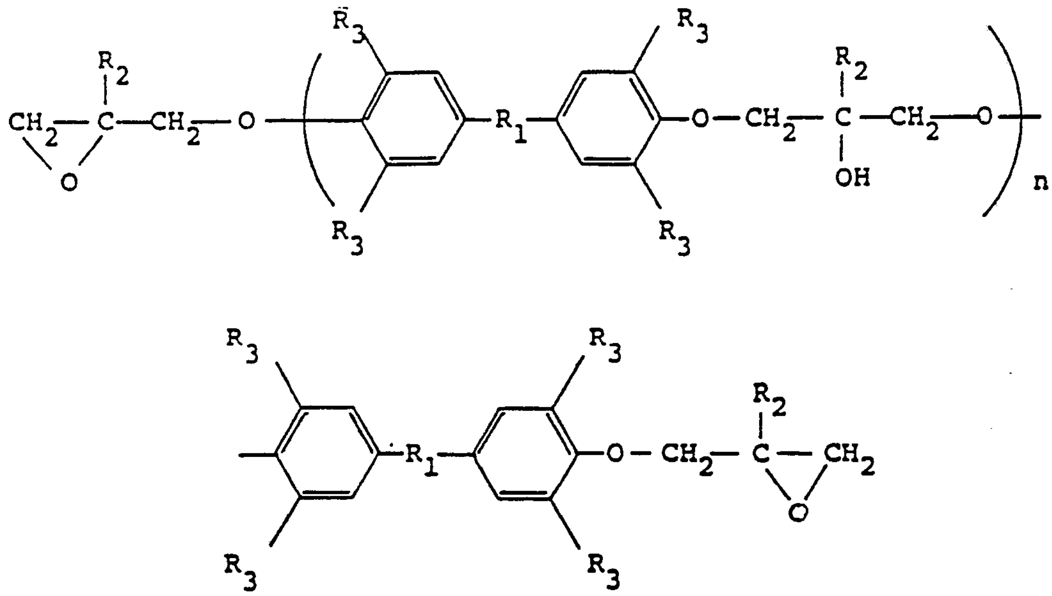

(I)

wherein

$R_1$ represents

$-CH_2-$, 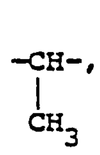, 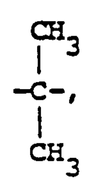, 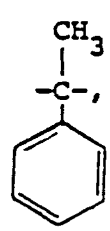, 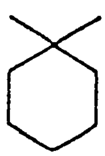, 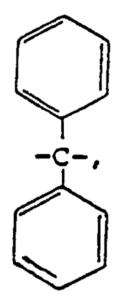, 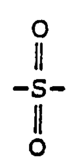 or $-O-$;

$R_2$ represents a hydrogen atom or a methyl group;

$R_3$ represents a hydrogen or halogen atom, and n represents a number of repeating units and n can be zero; and

$R_1$, $R_2$ and $R_3$ may individually be the same or different.

Furthermore, the coating compositions in accordance with the present invention comprise the polyol resin [A] as mentioned above and a hydrocarbon resin [B] such as white tar.

Detailed Description of the Invention

The polyol resin [A] in accordance with the present invention is derived from the bisphenol type epoxy resin (a) represented by the aforementioned general formula (I). This bisphenol type epoxy resin (a) is a conventionally known compound which is obtained by reaction of a bisphenol with haloepoxide such as epichlorohydrin or β-methylepichlorohydrin. Bisphenols are obtained by reaction of phenol or 2,6-dihalo-

bisphenol with aldehydes or ketones such as formaldehyde, acetaldehyde, acetone, acetophenone, cyclohexanone or benzophenone, or oxidation of dihydroxyphenyl sulfide with peracids, or etherification reaction of hydroquinones.

In accordance with the invention, there is obtained the polyol resin [A] by reaction of the bisphenol type epoxy resin (a) as mentioned above with at least two out of the following compounds.

(i) a main chain extender (b) selected from primary amines, said extender (b) being capable of bringing about main chain extension reaction of said bisphenol type epoxy resin (a),

(ii) an active hydrogen containing compound (c) selected from among secondary amines, phenols and cabroxylic acids, said compound (c) being capable of bringing about ring opening of the temrinal epoxy group of said bisphenol type epoxy resin (a), and

(iii) a univalent carboxylic acid (d) capable of esterifying the hydroxyl group of said bisphenol type epoxy resin.

The reaction of the bisphenol type epoxy resin (a) with the above-mentioned main chain extender (b), active hydrogen containing compound (c) and univalent carboxylic acid (d) may be carried out in any sequence. For example, the bisphenol type epoxy resin (a) is in sequence reacted with the main chain extender (b), the active hydrogen containing compound (c) and the univalent carboxylic acid (d), or the resin (a) is reacted with the (b), (c) and (d) at the same time. The modes of the reaction to be carried out according to the present invention are illustrated hereinbelow.

In the present invention, the bisphenol type epoxy resin (a) may first be reacted with the main chain extender (b) selected from primary amines to extend the main chain of the bisphenol type epoxy resin (a). If necessary, polyvalent phenols are co-used as a main chain extender together with the primary amines (b). The thus chain-lengthened bisphenol type epoxy resin may then be reacted with the active hydrogen containing compound (c) selected from among secondary amines, phenols and carboxylic acids to effect ring opening reaction of the terminal epoxy group. Under certain circumstances, the bisphenol type epoxy resin (a) is reacted at the same time with the above-mentioned main chain extender (b) and active hydrogen containing compound (c) to extend the main chain of the bisphenol type epoxy resin (a) and at the same time effect ring opening reaction of the terminal epoxy group, whereby the polyol resin [A] can be prepared.

It is presumed that the reaction as mentioned above would probably proceed in the manner as shown by the following reaction formula.

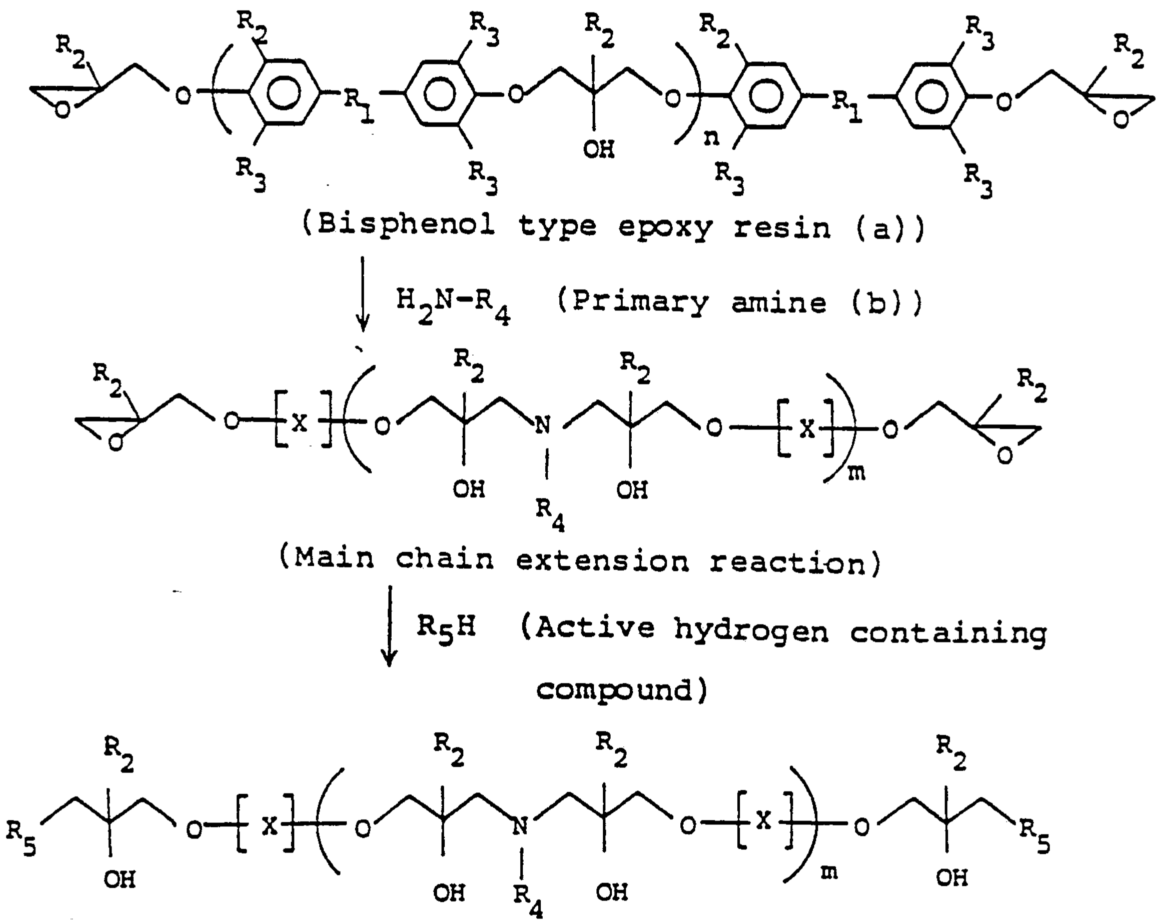


wherein X represents

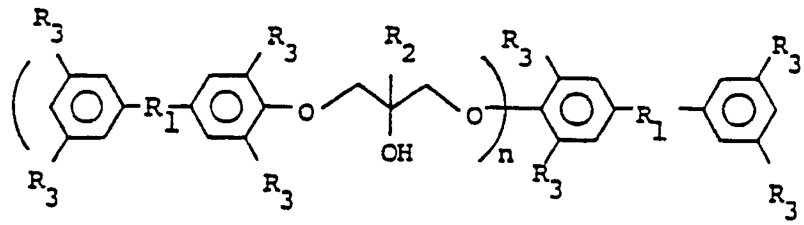

The polyol resin [A] may also be prepared by reacting the epoxy resin modification product thus obtained after the completion of the extension of the main chain and ring opening reaction of the terminal epoxy group, if necessary, with the univalent carboxylic acid to esterifying the hydroxyl groups (—OH) of this epoxy resin modification product.

It is presumed that the reaction as mentioned above would probably proceed in the manner as shown by the following reaction formula.

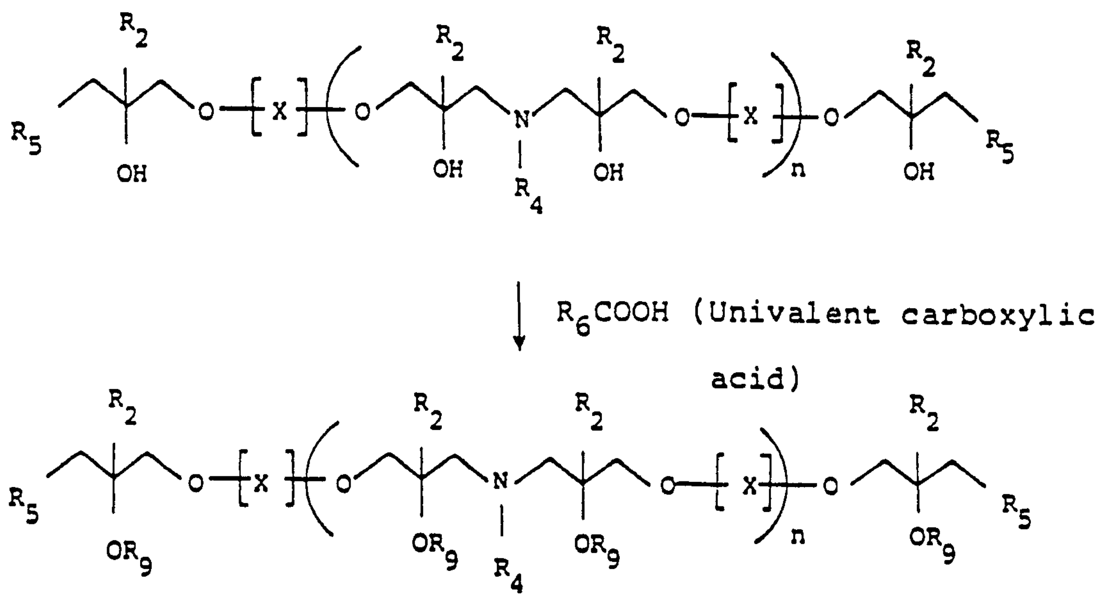


wherein X is as defined above and $R_9$ is hydrogen or $COR_6$.

In the above-mentioned esterification reaction, the hydroxyl groups (—OH) of the epoxy resin modification products are not esterified 100%, and some of said hydroxyl groups remain unchanged, as they are.

In the present invention, moreover, the polyol resin [A] may be prepared by reacting the bisphenol type epoxy resin (a) with the above-mentioned active hydrogen containing compound (c) to effect ring opening of the terminal epoxy group of said bisphenol type epoxy resin (a) and then reacting the epoxy resin modification product obtained after the completion of the ring opening reaction of the terminal epoxy group with the above-mentioned univalent carboxylic acid (d) to esterify the hydroxy group of this epoxy resin modification product.

It is presumed that the reaction as mentioned above would probably proceed in the manner as shown by the following reaction formula.

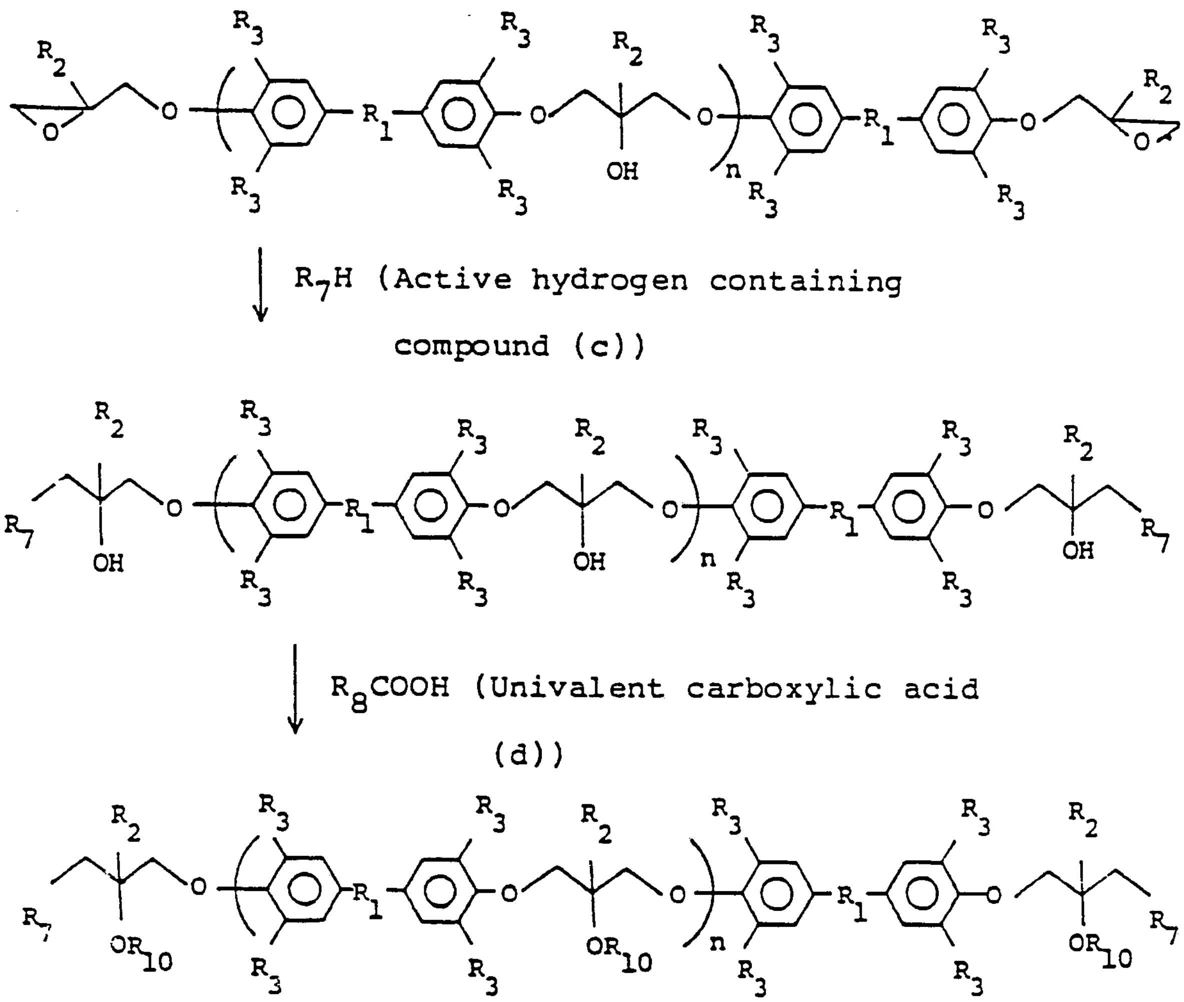


wherein $R_{10}$ is hydrogen or $COR_8$.

In the above-mentioned esterification reaction, the hydroxyl groups of the epoxy resin modification product are not esterified 100% and some of said hydroxyl groups remain unchanged, as they are.

As stated hereinbefore, the main chain extender (b) which brings about main chain extension reaction of the bisphenol type epoxy resin (a) is selected from primary amines. Preferably usable as the primary amines are alkyl-containing primary amines, and practically such compounds as mentioned below are used.

(i) Aliphatic primary amines: For instance, propylamines, butylamines, hexylamines, laurylamines, stearylamines, palmitylamines, oleylamines and erucylamine, etc., particularly the above-mentioned amines having at least 8 carbon atoms, preferably at least 12 carbon atoms.

(ii) Aromatic amines: For instance, toluidines, xylidines, cumidines (isopropylaniline), hexylanilines, nonylanilines and dodecylanilines, particularly anilines having a nucleus bonded side chain of at least 6 carbon atoms.

(iii) Alicyclic amines: For instance, cyclopentylamines, cyclohexylamines and norbornylamines.

(iv) Aromatic nucleus-substituted aliphatic primary amines: For instance, benzylamine, phenethylamine, 4-phenyl-3-methylbutylamine and cinnamylamine.

In the reaction of the bisphenol type epoxy resin (a) represented by the general formula (I) with the primary amine (b) to prepare a chain lengthened epoxy resin, it is also possible to extend the chain length of said bisphenol type epoxy resin (a) by the coexistence in the reaction system of such polyvalent phenols as bisphenols or resorcinols.

The active hydrogen containing compound (c) which brings about ring opening reaction of the terminal epoxy group of the bisphenol type epoxy resin (a) is selected from among secondary amines, phenols and carboxylic acids. The secondary amines, phenols and carboxylic acids used for the purpose intended include such compounds as mentioned below.

(i) Secondary amines (having 3 to 20 carbon atoms): For example, diethanolamine, diisopropanolamine, dipentanolamine, N-methylethanolamine, N-ethylpropanolamine, diethylamine, N-ethylaniline and N-ethanolaniline.

(ii) Phenols (having 6 to 25 carbon atoms): For example, phenol, cresols, isopropylphenols, amylphenols, nonylphenols, dodecylphenols, xylenols and hydroxyethylphenols.

(iii) Carboxylic acids (having 2 to 25 carbon atoms): For example, acetic acid, propionic acid, valerianic acid, caprylic acid, lauric acid, myristic acid, palmitic acid, stearic acid, acrylic acid, crotonic acid, methacrylic acid, angelic acid, oleic acid, elaidic acid, erucic acid, malonic acid, succinic acid, glutaric acid, adipic acid, pimelic acid, suberic acid, azelaic acid, sebacic acid, maleic acid, fumaric acid, mesaconic acid, citraconic acid, glutaconic acid, glycolic acid, lactic acid, hydroxybutyric acids, hydroxyvalerianic acids, hydroxycapronic acids, tartaric acid and citric acid.

The univalent carboxylic acid (d) which esterifies hydroxy groups of modification product of the bisphenol type epoxy resin (a) includes propionic acid, capric acid, lauric acid, palmitic acid, stearic acid, castor oil fatty acid, undecylenic acid, dehydrated castor oil fatty acid, linolic acid, linolenic acid, tall oil fatty acid and the like saturated or unsaturated monocarboxylic acids of 3 to 30 carbon atoms.

Reaction conditions under which the aforesaid reaction of the bisphenol type epoxy resin (a) with the main chain extender (b), active hydrogen containing compound (c) and univalent carboxylic acid (d) is carried out are explained hereinafter.

The reaction of the bisphenol type epoxy resin (a) with the main chain extender (b) and active hydrogen containing compound (c) is carried out in the presence of a catalyst at a temperature of 50°C to 25°C, preferably 100°C to 200°C.

The use of the reaction temperature below 50°C, is not preferable as the reaction rate becomes excessively low, and also the use of the reaction temperature exceeding 250°C, is not preferable as the ring opening reaction of the epoxy group with the hydroxyl group present in the epoxy resin or between the epoxy groups takes place to bring about a possibility of gelation of the reaction product.

The catalyst used in the above-mentioned reaction includes alkali metal hydroxides, e.g., sodium hydroxide, potassium hydroxide and lithium hydroxide; alkali metal alcoholates, e.g., sodium methylate; tertiary amines, e.g., dimethylbenzylamine, triethylamine and pyridine; quaternary ammonium salts, e.g., tetramethylammonium chloride and benzyltrimethylammonium chloride; organic phosphorus compounds, e.g., triphenylphosphine, triethylphosphine and methyl iodide adducts of triphenylphosphine; alkali metal salts, e.g., sodium carbonate and lithium chloride; and Lewis acids, e.g., boron trifluoride, aluminum chloride, tin tetrachloride and diethyl ether complexes of boron trifluoride.

The amount of the catalyst used is usually 0.01 to 10,000 ppm, preferably 0.1 to 1,000 ppm, based on the starting reactants, though it varies according to the reaction temperature. Under certain circumstances, it is also possible to use the reactant primary amines, as they are, as catalysts.

Though the above-mentioned reaction can be carried out without using solvents, the reaction may be carried out in the presence of solvents having no active hydrogen, such as hydrocarbons, e.g., toluene and xylene, and ketones, e.g., methyl isobutyl ketone, methyl ethyl ketone and cyclohexanone.

In the above-mentioned reaction as mentioned herein above, the reaction of the bisphenol type epoxy resin (a) represented by the general formula (I) with the main chain extender primary amine (b) (the first reaction) may first be effected to prepare an epoxy resin whose chain length has been extended, and then the reaction of this epoxy resin with the active hydrogen containing compound (c) (the second reaction) is effected to prepare a polyol resin. Under certain circumstances, however, the first reaction is carried out simultaneously with the second reaction. In this case, the reaction may be carried out by allowing the bisphenol type epoxy resin (a), primary amines (b) and active hydrogen containing compounds (c) to exist together.

Under certain circumstances, furthermore, in the reaction of the epoxy resin (a) represented by the general formula (I) with the main chain extender primary amine (b) to prepare a chain lengthened epoxy resin, it is also possible to extend the chain length by allowing bisphenols or polyvalent phenols such as resorcin to exist together with the reactants.

In practicing the reaction, the equivalent weight ratio of the bisphenol type epoxy resin (a) represented by the general formula (I) to the primary amine (b) is preferably 100/50 to 100/98.

Furthermore, the reaction of the epoxy resin modification product whose chain length has been extended and, at the same time, whose epoxy groups have been ring opened in the manner as above, with the univalent carboxylic acid (d) is carried out in the presence or absence of a catalyst and solvent at about 150°C to 300°C, preferably about 180°C to 250°C.

The use of the reaction temperature below 150°C is not preferable as the reaction rate becomes excessively low, and also the use of the reaction temperature exceeding 300°C is not preferable as the resulting resins tend to degrade.

The catalyst used in the above-mentioned reaction includes organic or inorganic titanium compounds such as tetrabutyl titanate, tetraethyl titanate, butoxy titanium trichloride and titanium tetrachloride; organic or inorganic aluminium compounds such as triethyl aluminum, ethylaluminum chloride and aluminum trichloride; organic or inorganic zinc compounds such as diethylzinc and zinc chloride; tin compounds such as dibutyltin laurate and stannous chloride; acids such as boron trifluoride, p-toluenesulfonic acid and phosphoric acid; alkali metals or complexes thereof such as lithium, sodium, sodium naphthalene and potassium benzophenone; alkali metal hydroxide such as lithium hydroxide and sodium

hydroxide; alkali metal salts such as sodium carbonate and lithium acetate; alkali metal hydrides such as lithium hydride and sodium hydride; and tertiary amines such as triethylamine and pyridine. These catalysts are used in an amount of about 0.10 to 1,000 ppm, preferably about 0.1 to 500 ppm, based on the epoxy resin modification product having substantially no epoxy group.

In practicing the reaction of the above-mentioned epoxy resin modification product with the univalent carboxylic acid (d), the solvent used includes solvent having no active hydrogen, such as toluene, xylene, methyl isobutyl ketone, methyl ethyl ketone and cyclohexanone.

Furthermore, the aforesaid reaction of the bisphenol type epoxy resin (a) with the active hydrogen containing compound (c) is carried out in the presence of a catalyst at a temperature of 50°C to 250°C, preferably 100°C to 200°C.

The use of the reaction temperature below 50°C, is not preferable as the reaction rate becomes excessively low, and the use of the reaction temperature exceeding 250°C, is also not preferable as the ring opening reaction of the epoxy groups with the hydroxyl groups present in the epoxy resin or that reaction between the epoxy groups takes place to bring about a possibility of gelation of the resulting reaction product.

The catalyst used in the above-mentioned reaction includes alkali metal hydroxides (e.g., sodium hydroxide, potassium hydroxide and lithium hydroxide), alkali metal alcoholates (e.g., sodium methylate), tertiary amines (e.g., dimethylbenzylamine, triethylamine and pyridine), quaternary ammonium salts (e.g., tetramethylammonium chloride and benzyltrimethylammonium chloride), organic phosphorus compounds (e.g., triphenylphosphine and triethylphosphine), quaternary phosphonium salts, alkali metal salts (e.g., sodium carbonate and lithium chloride), and Lewis acids (e.g., boron trifluoride, aluminum chloride, tin tetrachloride and diethyl ether complex of boron trifluoride).

The amount of the catalyst used in the above-mentioned reaction is usually 0.1 to 10,000 ppm, preferably 0.1 to 1,000 ppm, based on the starting reactants, though it may vary according to the reaction temperature employed. Under certain circumstances, it is also possible to use the secondary amines used in the reaction, as they are, as the catalysts.

Though the above-mentioned reaction can be carried out without using solvents, the reaction may be carried out in the presence of solvents having no active hydrogen, such as hydrocarbons, e.g., toluene and xylene and such ketones as methyl isobutyl ketone, methyl ethyl ketone and cyclohexanone.

Still further, the reaction of the epoxy resin modification product obtained by the reaction of the bisphenol type epoxy resin (a) with the active hydrogen containing compound (c), in which the ring opening reaction of the epoxy groups has been effected, with the univalent carboxylic acid (d) to esterify the hydroxyl groups (—OH) of the epoxy resin can be carried out under the same conditions as in the case of the reaction of the epoxy resin modification product whose main chain has been extended and, at the same time, whose terminal epoxy group has been ring opened, with the univalent carboxylic acid (d).

The coating composition in accordance with the present invention is composed of the polyol resin [A] obtained in the manner as hereinbefore described, said polyol resin [A] being used as a base resin. The coating composition comprising this polyol resin [A] and the hydrocarbon resin [B] are capable of being freely colored in different tints. Moreover, this coating composition is excellent in corrosion resistance as well as in water resistance, and in comparison with conventional coating compositions comprising known polyol resins and bituminous materials, this coating composition is free from such troubles that low molecular components present in the composition bleed out on the coat surface to stain the surface of the substrate in contact with said coat and a topcoat provided on said coat surface for aesthetic purposes is discolored.

The coating composition of the present invention is illustrated in more detail hereinafter.

The present coating composition comprises the aforesaid polyol resin [A] and hydrocarbon resin [B] as base resins. As the hydrocarbon resin [B] there may be mentioned such resin known as white tar. Practical examples of the white tar include such resins as mentioned hereinbelow.

(i) Condensation products of monomers consisting essentially of alkyl benzenes, and formaldehyde, e.g., xylene resin and xylene-alkyl phenol resin.

(ii) Condensation products of monomers consisting essentially of ketones, such as acetophenone and cyclohexanone, and formaldehyde, e.g., ketone resin,

(iii) Condensation products of monomers consisting essentially of cumarone, and formaldehyde, e.g., cumarone resin and cumarone-indene resin,

(iv) Polymers of monomers consisting essentially of unsaturated hydrocarbons, for example, aliphatic, alicyclic or aromatic petroleum resins and hydrogenation products thereof, synthetic terpene resin, and polymer of styrene or derivatives thereof, copolymers of styrene or derivatives thereof and alkyl phenols, polymers or copolymers of α-methylstyrene or derivatives thereof, copolymers of dicyclopentadiene and toluene, copolymers of dicyclopentadiene and vinyl acetate, and hydrolysates thereof, and rosin ester resins and resins obtained by ester interchange of rosin esters with polyhydric alcohols.

These hydrocarbon resins [B] desirably have an average molecular weight of at least 300, preferably at least 400.

The present coating composition comprising the above-mentioned polyol resin [A] and hydrocarbon resin [B] may further contain a curing agent. Usable curing agents include the following compounds.

(i) Polyisocyanates which include, for example, hexamethylene diisocyanate, isophorone diisocyanate,

toluene diisocyanate, xylilene diisocyanate, diphenylmethane-4,4'-diisocyanate, naphthalene-1,5-diisocyanate, triphenylmethane-4,4',4''-triisocyanate, isopropylbenzene-2,4-diosocyanate, adducts of trimethylpropane with 3 moles of the above-mentioned polyisocyanates, adducts of pentaerythritol with 4 mole of the above-mentioned polyisocyanates, high molecular polyisocyanates (urethane prepolymers) obtained from the above-mentioned polyisocyanates and polyol compounds (e.g., polypropylene glycol and pentaerythritol), and adducts of the above-mentioned polyisocyanates with phenols or alkyl phenols (block isocyanates).

(ii) Polymethylol compounds having methylol groups or blocked methylol groups, such as resol, methylol melamine, methylated or butylated melamine resins.

These curing agents are prefrably used by incorporating them into the composition comprising the polyol resin [A] and hydrocarbon resin [B] immediately before use.

These curing agents are used in such an amount that the equivalent ratio of the hydroxyl groups of the polyol resin [A] to the functional groups (isocyanate groups or methylol groups) contained in the curing agent becomes 1/0.4 to 1/1.5 preferably 1/0.6 to 1/1.3.

The composition comprising the polyol resin [A] and hydrocarbon resin [B], which contains the curing agents can be cured at room temperature, however, it may be cured by heating, if necessary.

The coating composition of the present invention can be incorporated, if necessary, with various additives commonly used in conventional tar-urethane coating compositions, such as curing catalyst, fillers, diluents, dehydrating agents, etc.

The curing agents used include curing accelerators and curing retarders. Usable curing accelerators include, for example, tertiary amines such as dimethyl hydroaniline and dimethyl benzylamine, and organic metal compounds such as dibutyltin dilaurate and cobalt napthenate, and usable curing retarders include, for example, phenols and organic halogen compounds.

Usable fillers include inert fillers such as talc, clay, mica and silica sand, and colored pigments such as titanium white, red iron oxide, aluminum powder and carbon black.

The diluents used include dioctyl phthalate, dibutyl phthalate, and petroleum or coal high boiling neutral oil fractions.

The dehydrating agents used include calcined plaster, molecular sieve and silica gel.

The coating composition in accordance with the present invention can be prepared in the usual way. That is, the present coating composition may be prepared by kneading a mixture comprising the polyol resin [A] and hydrocarbon resin [B], if necessary, together with the above-mentioned curing catalyst, fillers, diluents and dehydrating agents, by means of a ball mill, mixer or the like.

On one hand, the curing agent can be prepared, if necessary, together with solvents or the like by mixing the curing agents by means of a mixture or the like.

Effects of the Invention

The polyol resins prepared in accordance with the present invention are excellent in compatibility with such solvents as aromatic compounds and with polymers consisting essentially of hydrocarbon compounds, such as petroleum resins, xylene resins and asphalt and, moreover, come to be markedly less in bubbling at the time of their curing.

The coating compositions prepared in accordance with the present invention are capable of being freely colored in different tints because the compositions are composed of the aforementioned polyol resin [A] and hydrocarbon resin [B] represented by white tar. Moreover, in comparison with conventional coating compositions comprising known polyol resins and bituminius materials, the present coating compositions exhibit such excellent effects that low molecular components of the compositions do not bleed out on the surface of the coat formed by the present coating composition to stain the surface of substrate in contact with said surface of the coat, and that a topcoat formed on the coat of the present composition for aesthetic purposes is not discolored.

While the present invention is described by examples, the present invention is not limited thereto. In the following examples, all parts are by weight unless otherwise indicated.

Example 1

A 2-liter separable flask equipped with a stirrer, a thermometer and a condenser was charged with 756 g of a bisphenol A-type epoxy resin having an epoxy equivalent of 189 and 114 g of n-butylamine, and thereafter the system was purged with an $N_2$ gas. The system was then heated on an oil bath and the reaction was carried out at a reaction temperature of 120°C with stirring until the epoxy equivalent became to be 1,000.

The reaction was then carried out while adding dropwise 91 g of diethanolamine from a dropping funnel. The reaction was continued until the epoxy equivalent of the system became to be 20,000 or more. After the reaction was complete, the system was diluted with a mixture of methyl isobutyl ketone and toluene in a weight ratio of 1:1 so that the content of a nonvolatile matter was about 60% by weight.

The hydroxyl value of the resulting resin per se was 315 mg-KOH/g; the nonvolatile matter of the resin solution was 60.5%; the solution viscosity measured at a temperature of 25°C using a B-type (Brookfield) viscometer was 9.1 Pa.s and the toluene tolerance (the weight of toluene added until the turbid point was

reached, when toluene was added to 100 g of the resin solution at 25°C) was 9 g-toluene/100 g-resin solution.

A tar urethane coating composition was then prepared from the thus obtained polyol resin as follows. A variety of performance evaluations were carried out.

A base consisting of 100 parts of the polyol resin solution described above, 109 parts of bitumen (Tarkron 230 available from Yoshida Seiyu, Japan), 91 parts of talc (talc imported by Asada Seihun, Japan), 36 parts of a 9:1 mixture of xylene and cycohexanone, and 13 parts of a thixotropic agent (Aerozil #300 available from Nippon Aerozil, Japan) was mixed with an isocyanate curing agent (Takenate D—102 available from Takeda Yakuhin Kogyo, Japan) in a molar ratio of NCO/OH of 0.8:1 to prepare a tar urethane coating composition.

The resulting coating composition had a pot life of one minute, a tack-free time of 0.2 hour, and a pencil hardness (after 3 days) of F. The extent of foaming was little.

The pot life was determined by using a B-type viscometer at 25°C and measuring the time when the viscosity of the blended coating composition was twice its initial viscosity. The tack-free time was determined by applying the blended coating composition to rolled steel for general structure (JIS G3101, SS41) having a thickness of 0.3 mm, and measuring the time when a needle did not penetrate into a wet paint film thickness of 500 microns at 20°C using a Gardner-type drying time recorder for measuring the drying temperature (manufactured by Ueshima Seisakusho, Japan). The pencil hardness was measured by examining the specimen used in the dryness test according to JIS K—5400 at 20°C. The foamed state was determined by using the blended coating composition in a polyethylene cap at 20°C, cutting it in a thickness direction having about 4 cm, and observing the foamed state of a cured product.

Examples 2 and 3

These examples describe cases wherein the kind of primary amines is varied.

A polyol resin was synthesized in the same manner as described in Example 1 except that n-butylamine was replaced with alkyl amines shown in Table 1.

The results are shown in Table 1.

TABLE 1

| | Example 2 | Example 3 |
|---|---|---|
| Primary amines used | n-Octylamine | n-Cetylamine |
| Amount of primary amines used (g) | 197 | 367 |
| Amount of diethanolamine used (g) | 100 | 118 |
| Hydroxyl value (mg-KOH/g) | 300 | 293 |
| Nonvolatile matter (%) | 60.1 | 60.7 |
| Solution viscosity (Pa.s/25°C) | 4.0 | 1.4 |
| Toluene tolerance (g-toluene/100 g-solution) | 48 | 291 |
| Pot life (min.) | 5 | 12 |
| Tack-free time (hr) | 0.4 | 0.7 |
| Pencil Hardness (after 3 days) | B | B |
| Foaming | Little | Little |

Example 4

A polyol resin was synthesized in the same manner as described in Example 1 except that n-butylamine was replaced with a mixture of 93 g of n-cetylamine and 248 g of bisphenol A; and diethanolamine was replaced with a mixture of 58 g of diethanolamine and 75 g of isopropylphenol.

The results are shown in Table 2.

Example 5

A polyol resin was synthesized in the same manner as described in Example 3 except that the operation wherein an epoxy resin was reacted with n-cetylamine and then reacted with diethanolamine

was replaced by an operation wherein an epoxy resin was simultaneously reacted with both n-cetylamine and diethanolamine.

The results are shown in Table 2.

TABLE 2

| | Example 4 | Example 5 |
|---|---|---|
| Hydroxyl value (mg-KOH/g) | 253 | 290 |
| Nonvolatile matter (%) | 60.0 | 60.3 |
| Solution viscosity (Pa.s/25°C) | 4.4 | 1.1 |
| Toluene tolerance (g-toluene/100 g-solution) | 43 | 203 |
| Pot life (min.) | 19 | 14 |
| Tack-free time (hr) | 1.1 | 0.8 |
| Pencil Hardness (after 3 days) | 2B | B |
| Foaming | Little | Little |

Example 6

A polyol resin was synthesized in the same manner as described in Example 3 except that the bisphenol A-type epoxy resin having an epoxy equivalent of 189 was replaced with a bisphenol A-type epoxy resin having an epoxy equivalent of 470.

The results are shown in Table 3.

Example 7

A polyol resin was synthesized in the same manner as described in Example 3 except that the bisphenol A-type epoxy resin having an epoxy equivalent of 189 was replaced with a bisphenol AD-type epoxy resin having an epoxy equivalent of 173.

The results are shown in Table 3.

TABLE 3

| | Example 6 | Example 7 |
|---|---|---|
| Epoxy resin (g) | 940 | 692 |
| Cetylamine (g) | 129 | 374 |
| Diethanolamine (g) | 105 | 112 |
| Hydroxyl value (mg-KOH/g) | 289 | 285 |
| Nonvolatile matter (%) | 59.8 | 60.3 |
| Solution viscosity (Pa.s/25°C) | 6.8 | 1.2 |
| Toluene tolerance (g-toluene/100 g-solution) | 21 | 195 |
| Pot life (min.) | 14 | 12 |
| Tack-free time (hr) | 0.8 | 0.7 |
| Pencil Hardness (after 3 days) | HB | B |
| Foaming | Little | Little |

## Comparative Example 1

This example illustrates an example wherein bisphenol A is used as a chain extender without using the primary amine.

The same operation as described in Example 1 was carried out except that n-butylamine was replaced with 332 g of bisphenol A, and the amount of diethanolamine was 114 g.

The hydroxyl value of the resulting resin was 304 mg-KOH/g. When the resin was diluted with 1:1 mixture of methyl isobutyl ketone and toluene so that the content of a nonvolatile matter was 60% by weight, the resin was not completely dissolved in the solvents and thus a non-uniform solution was formed.

## Comparative Example 2

The same operation as described in Comparative Example 1 was carried out except that diethanolamine was replaced with 148 g of isopropylphenol.

The hydroxyl value of the resulting resin per se was 224 mg-KOH/g; the nonvolatile matter of the resin solution was 61%; the solution viscosity was 3.5 Pa.s and the toluene tolerance was 51 g-toluene/100 g-resin solution.

A coating composition prepared from the resulting resin in the same manner as described in Example 1 had a pot life of 68 minutes, a tack-free time of 2.8 hours and a pencil hardness (after 3 days) of 4B. Further, there was extensive foaming.

## Example 8

A polyol resin was synthesized in the same manner as described in Example 5 except that the amount of n-cetylamine was 434 g instead of 367 g, and diethanolamine was replaced with 54 g of p-isopropylphenol. The hydroxyl value of the resulting resin per se, and the nonvolatile matter content, solution viscosity and toluene tolerance of the resulting resin solution were 180 mg-KOH/g, 60.3%, 2.3 Pa.s and 500 g-toluene/100 g-resin solution, respectively.

The pot life, tack-free time and pencil hardness (after 3 days) of a coating composition prepared from the resulting resin in the same manner as described in Example 1 were 15 minutes, 0.9 hour and 6B, respectively. The foaming of a paint film was little.

## Example 9

A polyol resin was synthesized in the same manner as described in Example 1 except that a mixture of 133 g of n-cetylamine and 203 g of bisphenol A was used and diethanolamine was replaced with 151 g of a m/p mixture of isopropylphenols (the weight ratio of m/p = 6/4).

The hydroxyl value of the resulting resin per se, and the nonvolatile matter content, solution viscosity and toluene tolerance of the resin solution were 188 mg-KOH/g, 60.3%, 1.46 Pa.s (25°C) and 244 g-toluene/100 g-resin solution, respectively.

A white tar urethane coating composition was then prepared from the thus obtained polyol resin as described hereinafter. A variety of performance evaluations of the resulting coating composition were carried out.

A base consisting of 100 parts of the polyol resin solution described above, 88 parts of a xylene resin (available from Mitsubishi Gas Kagaku, Japan under the trade name Nikanol L), 114 parts of talc (talc imported by Asada Seihun, Japan), 18 parts of titanium white (Taipake R-820 available from Ishihara Sangyo, Japan), 29 parts of a 9:1 mixture of xylene and cyclohexanone, and 1.5 parts of a thixotropic agent (available from Nippon Aerozil under the trade name Aerozil 300) was mixed with an isocyanate curing agent (available from Takeda Yakuhin Kogyo, Japan, under the trade name Takenate D-102) in a molar ratio of —NCO/—OH of 0.8:1 to prepare a white tar urethane coating composition.

The pot life, tack-free time and pencil hardness (after 3 days) of the resulting coating composition were 18 minutes, 0.8 hour and 6B, respectivley. The extent of foaming of the paint film was little.

## Comparative Example 3

A white tar urethane coating composition was tried to prepare using the polyol resin synthesized in Comparative Example 2, in the same manner as described in Example 9. However, the compatibility of the polyol resin with the xylene resin was poor and it was impossible to prepare a coating composition.

## Example 10

A 2-liter separable flask provided with a stirrer, a thermometer and a condenser equipped with a receiver for storing a condensate was charged with 925 g of a bisphenol A-type epoxy resin R-304 available from Mitsui Sekiyu Kagaku Kogyo K.K., Japan; epoxy equivalent = 925). The system was purged with nitrogen, and thereafter 50 g of xylene were added. The mixture was raised to a temperature of 120°C on an oil bath with stirring. The mixture was then raised to a temperature of 150°C while adding dropwise 105 g of diethanolamine from a dropping funnel. At this tmeperature, the reaction was continued until the epoxy equivalent of the reaction product became to be 20,000 or more.

Thereafter, 288 g of stearic acid were added, and the esterification reaction was carried out until the acid value was less than 1 while raising the temperature of the system to 250°C. Water formed in the

esterification reaction was subjected to azeotropic distillation using xylene to remove water from the reaction system. After the reaction was complete, the reaction mixture was diluted with a mixture of methyl isobutyl ketone and toluene in a weight ratio of 1:1 so that the nonvolatile matter in the solution was about 60% by weight.

The resulting polyol resin solution had a non-volatile matter content of 60.2% by weight, a viscosity of 2.1 Pa.s (B-type viscometer: 25°C), and a toluene tolerance of 141 g (the weight of toluene added until the turbid point was reached, when toluene was added to 100 g of the resin solution at 25°C). The hydroxyl value of the polyol resin per se was 191 mg-KOH/g.

Coating Composition Evaluation

A base consisting of 100 parts of the polyol resin solution described above, 109 parts of bitumen (Tarkron 230 available from Yoshida Seiyu, Japan), 91 parts of talc (talc imported by Asada Seihun, Japan), 36 parts of a 9:1 mixture of xylene and cyclohexanone, and 13 parts of a thixotropic agent (Aerozil #300 available from Nippon Aerozil, Japan) was mixed with an isocyanate curing agent (Takenate D-102 available from Takeda Yakuhin Kogyo, Japan) in a molar ratio of NCO/OH of 0.8:1 to prepare a tar urethane coating composition. This coating composition was evaluated in the same manner as described in Example 1.

Examples 11 and 12

Example 10 was repeated except that the amounts of stearic acid used were changed. (see Table 4).

Examples 13 to 18

Example 10 was repeated except that stearic acid was replaced with other monocarboxylic acids in predetermined amounts.

The polyol resin solutions obtained in Examples 11 to 18 and tar urethane coating compositions prepared therefrom were evaluated in the same manner as described in Example 10.

The results are shown in Table 4.

TABLE 4

| Example No. | Monocarboxylic Acid: Name | Monocarboxylic Acid: g | Polyol Resin Solution: Nonvolatile matter | Polyol Resin Solution: Viscosity | Polyol Resin Solution: Toluene tolerance | Hydroxyl value of resin | Pot life | Measurement Items: Tack-free time | Measurement Items: Pencil hardness | Foaming |
|---|---|---|---|---|---|---|---|---|---|---|
| | | | (wt%) | (Pa.s) | (g) | (mg-KOH/g) | (min.) | (hr.) | (after 3 days) | |
| 10 | Stearic acid | 288 | 60.2 | 2.1 | 141 | 191 | 20 | 1.4 | 2B | Little |
| 11 | Stearic acid | 144 | 60.2 | 8.4 | 39 | 243 | 9 | 1.0 | B | " |
| 12 | Stearic acid | 576 | 59.9 | 0.7 | ∞ | 126 | 30 | 2.8 | 6B | " |
| 13 | Caprylic acid | 146 | 60.1 | 5.2 | 45 | 238 | 18 | 1.2 | 2B | " |
| 14 | Lauric acid | 203 | 59.7 | 3.0 | 79 | 208 | 23 | 1.4 | " | " |
| 15 | Castor oil fatty acid | 309 | 60.1 | 2.5 | 125 | 234 | 17 | 1.4 | " | " |
| 16 | Dehydrated castor oil fatty acid | 284 | 59.9 | 1.9 | 143 | 195 | 21 | 1.4 | " | " |
| 17 | Linolenic acid | 281 | 59.8 | 2.0 | 147 | 197 | 20 | 1.3 | " | " |
| 18 | Tall oil fatty acid | 293 | 60.0 | 2.1 | 140 | 193 | 21 | 1.5 | " | " |

Example 19

Example 10 was repeated except that 940 g of another bisphenol A-type epoxy resin (R-301 available from Mitsui Sekiyu Kagaku Kogyo K.K., Japan; epoxy equivalent = 470), the amount of diethanolamine used was 210 g and the amount of stearic acid used was 414 g.

Example 20

Example 10 was repeated except that 900 g of another bisphenol A-type epoxy resin (epoxy equivalent = 1,800) were used, the amount of diethanolamine used was 52 g and the amount of stearic acid used was 224 g.

Example 21

Example 10 was repeated except that 1,000 g of another bisphenol A-type epoxy resin (epoxy equivalent = 3,000) was used, diethanolamine was replaced with 45 g of isopropylphenol, and the amount of stearic acid used was 187 g.

Example 22

Example 10 was repeated except that 600 g of another bisphenol A-type epoxy resin (epoxy equivalent = 189) was used together with 264 g of bisphenol A as a chain extender, the amount of diethanolamine used was 91 g and the amount of stearic acid used was 267 g.

Examples 23-1 through 23-9

Example 22 was repeated except that the bisphenol A-type epoxy resin and/or bisphenol A were replaced with other bisphenol-type epoxy resins and/or bisphenols.

The polyol resin solutions obtained in Examples 19-22 and Examples 23-1 through 23-9, and tar urethane coating compositions prepared therefrom were evaluated in the same manner as described in Example 10. The results obtained are shown in the following Tables 5-1 and 5-2.

TABLE 5—1

| Example No. | Polyol Resin Solution Nonvolatile matter | Viscosity | Toluene tolerance | Hydroxyl value of resin | Pot life | Measurement Items Tack-free time | Pencil hardness | Foaming |
|---|---|---|---|---|---|---|---|---|
| | (wt%) | (Pas) | (g) | (mg-KOH/g) | (min.) | (hr.) | (after 3 days) | |
| 19 | 59.6 | 1.0 | 200 | 225 | 9 | 1.0 | B | Little |
| 20 | 60.4 | 8.0 | 130 | 161 | 20 | 1.6 | 6B | " |
| 21 | 60.1 | 12.0 | 100 | 133 | 80 | 6.1 | 6B↓ | " |
| 2 | 60.1 | 1.9 | 163 | 189 | 22 | 1.5 | 2B | " |
| 23 | 60.0 | 2.0 | 159 | 197 | 21 | 1.4 | " | " |

TABLE 5—2

| Ex. No. | Bisphenol type epoxy resin: Kind | Epoxy equivalent | g | Bisphenols: Name | g | Poly resin solution: Non-volatile matter | Viscosity | Toluene tolerance | Hydroxyl value of resin | Measurement items: Pot life | Tack-free time | Pencil hardness | Foaming |
|---|---|---|---|---|---|---|---|---|---|---|---|---|---|
| | | | | | | (wt(%) | (PaS) | (g) | (mg-KOH/g) | (min.) | (hr) | (after 3 days) | |
| 23-1 | Epoxy resin obtained from 1,1-bis(4-hydroxy-phenyl)ethane and epichlorohydrin | 173 | 549 | 1,1-Bis(4-hydro-xyphenyl)ethane | 248 | 60.0 | 1.2 | 159 | 197 | 21 | 1.4 | 2B | Little |
| 23-2 | Epoxy resin obtained from bisphenol F and epichlorohydrin | 170 | 540 | Bisphenol F | 232 | 59.8 | 1.0 | 163 | 204 | 19 | 1.3 | " | " |
| 23-3 | Epoxy resin obtained from 1,1-bis(4-hydroxy-phenyl)-1-phenylethane and epichlorohydrin | 217 | 689 | 1,1-Bis(4-hydro-xyphenyl)-1-phenylethane | 336 | 59.9 | 9.3 | 165 | 166 | 23 | 1.4 | B | " |
| 23-4 | Epoxy resin obtained from 1,1-bis(4-hydroxy-phenyl)cyclohexane and epichlorohydrin | 205 | 651 | 1,1-Bis(4-hydro-xyphenyl)cyclo-hexane | 310 | 60.3 | 7.4 | 181 | 177 | 22 | 1.5 | 4B | " |
| 23-5 | Epoxy resin obtained from bisphenol A and epichlorohydrin | 189 | 600 | 1,1-Bis(4-hydro-xyphenyl)ethane | 248 | 60.1 | 1.6 | 160 | 192 | 24 | 1.6 | 2B | " |
| 23-6 | " | " | " | 1,1-Bis(4-hydro-xyphenyl)-1-phenylethane | 336 | 60.0 | 5.3 | 153 | 178 | 20 | 1.3 | " | " |
| 23-7 | " | " | " | 1,1-Bis(4-hydro-xyphenyl)cyclo-hexane | 310 | 60.5 | 4.3 | 169 | 182 | 23 | 1.4 | 3B | " |
| 23-8 | " | " | " | 2,2-Bis(3,5-di-bromo-4-hydroxy)propane | 630 | 59.4 | 1.5 | 155 | 145 | 22 | 1.4 | 2B | " |
| 23-9 | Epoxy resin obtained from bisphenol A and β-methyl-epichloro-hydrin | 205 | 651 | Bisphenol A | 264 | 59.7 | 1.8 | 167 | 180 | 18 | 1.2 | " | " |

Example 24

Example 22 was repeated except that the amount of stearic acid used was 380 g. There was prepared a polyol resin solution wherein its nonvolatile matter was 59.2% by weight, its viscosity was 2.3 PaS (25°C), its toluene tolerance was 380 g and the hydroxyl value of the polyol resin per se was 154 mg-KOH/g.

A base consisting of 100 parts of this polyol resin, 88 parts of xylene resin (Nikanol L available from Mitsubishi Gas Kagaku, Japan), 114 parts of talc (talc imported by Asada Seihun, Japan), 18 parts of titanium white (Taipake R-820 available from Ishihara Sangyo, Japan), 29 parts of a 9:1 mixture of xylene and cyclohexanone, and 15 parts of a thixotropic agent (Aerozil #300 available from Nippon Aerozil, Japan) was mixed with an isocyanate curing agent (Takenate D-102 available from Takeda Yakuhin Kogyo, Japan) in a molar ratio of NCO/OH of 0.8:1 to prepare a white tar urethane coating composition.

The white tar urethane coating composition prepared was evaluated in the same manner as described in Example 10.

Examples 25 to 30

Example 24 was repeatd except that stearic acid was replaced with the predetermined amounts of other monocarboxylic acids.

The polyol resin solutions obtained in Examples 24 to 30 described above and the white tar urethane coating compositions prepared therefrom were evaluated in the same manner as described in Example 10. The results obtained are shown in the following table 6.

TABLE 6

| Example No. | Monocarboxylic Acid | | Polyol Resin Solution | | | Hydroxyl value of resin | Measurement Items | | | |
|---|---|---|---|---|---|---|---|---|---|---|
| | Name | g | Nonvolatile matter | Viscosity | Toluene tolerance | | Pot life | Tack-free time | Pencil hardness | Foaming |
| | | | (wt%) | (PaS) | (g) | (mg-KOH/g) | (min.) | (hr.) | (after 3 days) | |
| 24 | Stearic acid | 380 | 59.2 | 2.3 | 380 | 154 | 120 | 7.7 | 6B ↓ | Little |
| 25 | Caprylic acid | 230 | 58.8 | 2.1 | 96 | 189 | 62 | 5.7 | " | " |
| 26 | Undecylenic acid | 407 | 59.2 | 2.2 | 131 | 183 | 75 | 6.0 | " | " |
| 27 | Castor oil fatty acid | 375 | 58.1 | 2.0 | 116 | 213 | 54 | 5.1 | " | " |
| 28 | Dehydrated castor oil fatty acid | 386 | 59.5 | 2.6 | 335 | 159 | 143 | 8.4 | " | " |
| 29 | Tall oil fatty acid | 248 | 58.9 | 2.0 | 350 | 157 | 149 | 8.5 | " | " |
| 30 | Linolic acid | 375 | 57.9 | 1.0 | 360 | 163 | 147 | 8.5 | " | " |

Example 31

Example 24 was repeated except that the amount of diethanolamine used was 46 g, the amount of stearic acid used was 212 g and 60 g of isopropylphenol were further used as an active hydrogencontaining compound.

Example 32

Example 24 was repeated except that bisphenol A was replaced with 306 g of stearylamine, the amount of diethanolamine used was 95 g and the amount of stearic acid used was 259 g.

Example 33

Example 24 was repeated except that bisphenol A was replaced with 134 g of resorcin, the amount of diethanolamine used was 77 g and the amount of stearic acid used was 360 g.

The polyol resin solutions obtained in Examples 31 to 33 described above and the white tar urethane coating compositions prepared therefrom were evaluated in the same manner as described in Example 10. The results obtained are shown in the following Table 7.

TABLE 7

| Example No. | Polyol Resin Solution | | | Hydroxyl value of resin | Measurement Items | | | |
|---|---|---|---|---|---|---|---|---|
| | Nonvolatile matter | Viscosity | Toluene tolerance | | Pot life | Tack-free time | Pencil hardness | Foaming |
| | (wt%) | (PaS) | (g) | (mg-KOH/g) | (min.) | (hr.) | (after 3 days) | |
| 31 | 58.8 | 1.2 | 470 | 163 | 370 | 16.5 | 6B↓ | Little |
| 32 | 58.5 | 0.32 | ∞ | 182 | 38 | 1.7 | 4B | " |
| 33 | 58.8 | 1.9 | ∞ | 187 | 58 | 5.4 | 6B↓ | " |

### Comparative Example 4

Example 10 was repeated except that the esterification with stearic acid was not carried out. While the resulting polyol resin was diluted with a mixture of methyl isobutyl ketone and toluene in a weight ratio of 1:1 so that the nonvolatile matter was about 60% by weight, the polyol resin was not completely dissolved in the solvents and thus as ununiform dispersion was formed. Further, the hydroxyl value of the resin per se was 308 mg-KOH/g.

### Comparative Example 5

Example 31 was repeated except that the esterification with stearic acid was not carried out. The resulting polyol resin solution had a nonvolatile matter content of 60.9% by weight, a viscosity of 8.9 PaS (25°C) and a toluene tolerance of 14 g. The hydroxyl value of the resin per se was 240 mg-KOH/g.

The preparation of a white tar urethane coating composition was tried using the polyol resin solution. However, the polylol resin and the xylene resin phase separation occurred, and it was impossible to prepare the coating composition.

### Example 34

A 3-necked separable flask provided with a stirrer, a thermometer and a condenser equipped with a receiver for storing a condensate was charged with 925 g of a bisphenol A-type epoxy resin haing an epoxy equivalent of 925 (R-304 available from Mitsui Sekiyu Kagaku Kogyo K.K., Japan). The system was purged with $N_2$. Then, 50 g of xylene were added to the system, and the mixture was raised to a temperature of 120°C on an oil bath with stirring. The mixture was then raised to a temperature of 150°C while adding dropwise 105 g of diethanolamine from a dropping funnel. At this temperature, the reaction was carried out until the epoxy equivalent of the reaction product became to be 20,000 or more.

Thereafter, 419 g of stearic acid were added to the system, and the esterification reaction was carried out while gradually raising the temperature to 250°C. Water formed in the esterification reaction was subjected to azeotropic distillation using xylene to remove water from the reaction system. The reaction was carried out until the acid value of the product was less than 1.

After the reaction was complete, the reaction mixture was diluted with a mixture of methyl isobutyl ketone and toluene in a weight ratio of 1:1 so that the nonvolatile matter in the solution was about 60% by weight.

The resulting polyol resin solution had a nonvolatile matter content of 60.2% by weight, and the hydroxyl value of the polyol resin per se was 163 mg-KOH/g.

### Preparation of White Tar Solution

The condensation product of xylene and formaldehyde (average molecular weight = 400; viscosity = 0.75 PaS at 50°C) was used as a white tar component, and diluted with a mixture of xylene and cyclohexane (weight ratio = 9/1) so that the resin content was 60% by weight. Thus, a white tar solution was prepared.

### Preparation of Coating Compositions

Base

One hundred parts of the polyol resin solution described above, 130 parts of the white tar, solution, 100 parts of talc (talc imported by Asada Seihun, Japan), 16 parts of titanium white (Taipake R-820 available from Ishihara Sangyo, Japan) and one part of a thixotropic agent (Aerozil #300 available from Nippon Aerozil, Japan) were mixed in a sand mill to prepare a base.

Curing Agent

A toluene diisocyanate-type curing agent (Takenate D-102 available from Takeda Yakuhin Kogyo, Japan) was used.

Ratio of Curing Agent to Base

The base and the curung agent were blended so that the molar ratio of an isocyanate group in the curing agent to the hydroxyl group of polyol resin in the base (i.e., NCO/OH) ws 0.8:1.

Evaluation of Coating Compositions

The dryness, pencil hardness and foamed state of the coating compositions were evaluated in the same manner as described in Example 1. Other properties were evaluated as follows:

Impact Resistance

A coating composition was applied to a degreased and sandblasted (SG #100) rolled steel for general structure (JIS G3101, SS41) having a thickness of 2 mm to prepare a test panel having a dry film thickness of about 200 microns. This test panel was cured for one month at a temperature of 20°C and thereafter a test was carried out according to JIS K5400 by means of a Dupont-type impact tester (impactor diameter = 1/2 inch; load = 500 g; test temperature = 20°C.

Flexibility

A specimen having a dry film thickness of 50 microns was prepared according to JIS K5400. After the specimen was cured for one month at a temperature of 20°C, a test was carried out using a stem having a diameter of 4 mm. The paint film having no cracking/peeling was considered to as "an acceptable product" (test temperature = 20°C).

Chemical Resistance

A soft steel plate was degreased, its four corners and peripheral edges were rounded by means of a file and then sandblasted (SG #100). A coating composition was applied to the soft steel plate (SS41) according to JIS K5400 to prepare a test panel having a dry film thickness of about 200 microns (the corners and edges of the test panel were coated so that the paint film did not become thin).

After this test panel was cured for one week at a temperature of 20°C, the half of the test plate was immersed in the following test solution (test temperature = 35°C).

Unless blister was generated for 7 days under these conditions, the test panel was considered to as "an acceptable product".

Composition of Test Solution

| | |
|---|---|
| Distilled water | 1000 ml |
| Common salt | 50 g |
| Acetic acid | 10 ml |
| 30% $H_2O_2$ | 5 g |

The results are shown in Table 8.

Example 35

Various tests were carried out in the same manner as described in Example 34 except that the epoxy resin having an epoxy equivalent of 925 was replaced with 600 g of bisphenol-type epoxy resin having an epoxy equivalent of 189 (R-140 P available from Mitsui Sekiyu Kagaku Kogyo K.K., Japan) and 264 g of bisphenol A; and 91 g of diethanolamine annd 380 g of stearic acid were used.

The results are shown in Table 8.

Examples 36 to 41

Example 35 was repeated except that acid was replaced with monocarboxylic acids as shown in Table 8.

The results are shown in Table 8.

TABLE 8

| Example No. | Monocarboxylic acid: Kind | Monocarboxylic acid: Usage level | Hydroxyl value of polyol resin | Nonvolatile matter of polyol resin solution | Physical properties of coating composition and paint film: Dryness | Foaming | Pencil hardness | Impact resistance | Flexibility | Chemical Resistance |
|---|---|---|---|---|---|---|---|---|---|---|
| | | (g) | (mg-KOH/g) | (wt%) | (hr.) | | (after 3 days) | (cm) | | |
| 34 | Stearic acid | 419 | 163 | 60.2 | 7.9 | Little | 6B↓ | 20 | Acceptable | Acceptable |
| 35 | Stearic acid | 380 | 154 | 59.2 | 7.7 | Little | 6B↓ | 20 | " | " |
| 36 | Caprylic acid | 230 | 189 | 58.8 | 5.7 | Little | 6B↓ | 20 | " | " |
| 37 | Undecylenic acid | 249 | 183 | 59.2 | 6.0 | Little | 6B↓ | 20 | " | " |
| 38 | Castor oil fatty acid | 407 | 213 | 58.1 | 5.1 | Little | 6B↓ | 50↑ | " | " |
| 39 | Dehydrated castor oil fatty acid | 375 | 159 | 59.5 | 8.4 | Little | 6B↓ | 20 | " | " |
| 40 | Tall oil fatty acid | 386 | 157 | 58.9 | 8.5 | Little | 6B↓ | 20 | " | " |
| 41 | Linolic acid | 375 | 163 | 57.9 | 8.5 | Little | 6B↓ | 20 | " | " |

Example 42

Example 40 was repeated except that the epoxy resin having an epoxy equivalent 189 and the bisphenol A were replaced with 470 g of a bisphenol A-type epoxy resin having an epoxy equivalent of 470 (R-301 available from Mitsui Sekiyu Kagaku Kogyo K.K., Japan), 105 g of diethanolamine and 410 g of a tall oil fatty acid. The hydroxyl value of the polyol resin per se was 135 mg-KOH/g.

The results are shown in Table 9.

Examples 43 to 51

Example 40 was repeated except that the xylene/formaldehyde condensate used as the white tar component was replaced with hydrocarbon resins as shown in Table 9.

The results are shown in Table 9.

TABLE 9

| Example No. | White tar component: Kind | Number average molecular weight 1) | Softening point 2) | Viscosity | Physical properties of coating composition and paint film: Dryness | Foaming | Pencil hardness | Impact resistance | Flexibility | Chemical resistance |
|---|---|---|---|---|---|---|---|---|---|---|
| | | | (°C) | | (hr.) | | (after 3 days) | (cm) | | |
| 42 | Xylene/formaldehyde condensate | 400 | — | 0.750 Pas/ 50°C | 9.6 | Little | 6B↓ | 10 | Acceptable | Acceptable |
| 43 | Xylene/formaldehyde condensate | 1000 | 115 | — | 4.7 | Little | 6B↓ | 20 | Rejection | " |
| 44 | Cation polymer of isopropenyltoluene | 300 | 15 | — | 3.5 | Little | 6B↓ | 20 | Acceptable | " |
| 45 | Cation polymer of isopropenyltoluene | 600 | 95 | — | 3.7 | Little | 4B | 40 | Rejection | " |
| 46 | Cation polymer of fraction based on aromatic compound containing 9 carbon atoms which is a by-product in petro-chemical industries | — | 100 | — | 3.9 | Little | 6B↓ | 20 | " | " |
| 47 | Synthetic terpene resin | 580 | 102 | — | 3.4 | Little | 4B | 50 | " | " |
| 48 | Rosin ester | — | 84 | — | 4.7 | Little | 6B↓ | 10 | Acceptable | " |
| 49 | Cyclohexanone/for-maldehyde condensate | — | 90 | — | 6.8 | Little | 6B↓ | 10 | Rejection | " |
| 50 | White Tarkron 505 (manufactured by Yoshida Seiyusho, Japan) | — | — | 2.0 Pas/ 25°C | 4.1 | Little | 6B↓ | 10 | Acceptable | " |
| 51 | Dicyclopentadiene-vinyl acetate co-polymer | 550 | 105 | — | 6.3 | Little | 6B↓ | 10 | " | " |

1) Polystyrene conversion
2) Ring and ball method

Examples 52 to 55

Example 38 was repeated except that the xylene/formaldehyde condensate used as the white tar was replaced with resins as shown in Table 10.

The results are shown in Table 10.

TABLE 10

| Example No. | White tar component: Kind | Number average molecular weight | Softening point | Viscosity | Physical properties of coating composition and paint film: Dryness | Foaming | Pencil hardness | Impact resistance | Flexibility | Chemical resistance |
|---|---|---|---|---|---|---|---|---|---|---|
| | | | (°C) | | (hr.) | | (after 3 days) | (cm) | | |
| 52 | Xylene/formaldehyde condensate | 1,200 | 115 | — | 1.9 | Little | 6B ↓ | 50 ↑ | Acceptable | Acceptable |
| 53 | Dicyclopentadiene-vinylacetate copolymer | — | 100 | — | 2.7 | Little | 6B ↓ | 50 ↑ | " | " |
| 54 | Cyclohexanone/form-maldehyde condensate | — | 95 | — | 3.4 | Little | 6B | 40 | " | " |
| 55 | White Tarkron 505 | — | — | 2.0 Pas/25°C | 1/9 | Little | 6B ↓ | 10 ↓ | " | " |

Examples 56 and 57

Example 40 was repeated except that the amounts of the tall oil fatty acid were varied as shown in Table 11.

The results are shown in Table 11.

TABLE 11

| Example No. | Amount of tall oil fatty acid used | Hydroxyl value of polyol resin | Nonvolatile matter of polyol resin solution | Physical properties of coating composition and paint film | | | | | |
|---|---|---|---|---|---|---|---|---|---|
| | | | | Dryness | Foaming | Pencil hardness | Impact resistance | Flexibility | Chemical resistance |
| | (g) | (mg-KOH/g) | (wt%) | (hr) | | (after 3 days) | (cm) | | |
| 56 | 511 | 132 | 60.2 | 17 | Little | 6B↓ | 20 | Acceptable | Acceptable |
| 57 | 263 | 193 | 59.7 | 3.2 | Little | 4b | 30 | " | " |

Examples 58 and 59

Example 345 was repeated except that diethanolamine was replaced with a mixture of diethanolamine and p-isopropylphenol, and the amount of stearic acid used was varied so that the molar ratio of the carboxyl group of stearic acid to hydroxyl group of the resin before esterification (i.e., COOH/OH) was 0.26 as in the case of Example 35.

The results are shown in Table 12.

TABLE 12

| Example No. | Amount of diethanol-amine used | Amount of p-isopropyl-phenol used | Amount of stearic acid used | Hydroxyl value of polyol resin | Nonvolatile matter of polyol resin solution | Physical properties of coating composition and paint film | | | | | |
|---|---|---|---|---|---|---|---|---|---|---|---|
| | | | | | | Dryness | Foaming | Pencil hardness | Impact resistance | Flexibility | Chemical resistance |
| | (g) | (g) | (g) | (mg-KOH/g) | (wt%) | (hr.) | | (after 3 days) | (cm) | | |
| 58 | 73 | 24 | 353 | 150 | 59.3 | 20 | Little | 6B↓ | 10 | Acceptable | Acceptable |
| 59 | 45 | 59 | 315 | 141 | 59.8 | 27 | Little | 6B↓ | 10 | " | " |

Example 60

Example 35 was repeated except that bisphenol A was replaced with 306 g of stearylamine, and the amounts of diethanolamine and stearic acid used were 95 g and 257 g, respectively.

The hydroxyl value of the polyol resin was 182 mg-KOH/g, and the nonvolatile matter of the polyol resin solution was 59.5% by weight.

The results are shown in Table 13.

Examples 61 and 62

Example 53 was repeated except that Takenate D-102 curing agent was replaced with other isocyanate curing agents as shown in Table 13.

The results are shown in Table 13.

TABLE 13

| Example No. | Kind of isocyanate curing agent | Physical properties of coating composition and paint film: Dryness | Foaming | Pencil hardness | Impact resistance | Flexibility | Chemical resistance |
|---|---|---|---|---|---|---|---|
| | | (hr.) | | (after 3 days) | (cm) | | |
| 60 | Toluenediisocyanate type (trade name Takenate D-102) | 1.7 | Little | 4B | 30 | Acceptable | Acceptable |
| 61 | Xylilenediisocyanate type (trade name Takenate D-110N) | 6.0 | Little | 6B ↓ | 50 ↑ | " | " |
| 62 | Hexamethylenediisocyanate type (trade name | 21 | Little | 6B ↓ | 50 ↑ | " | " |

Comparative Example 6

Example 34 was repeated except that the operation for carrying out esterification with stearic acid was omitted.

When the resulting resin was diluted with a mixture of methyl isobutyl ketone and toluene in a weight ratio of 1:1 so that its nonvolatile matter was about 60% by weight, the resin was not completely dissolved in the solvents and thus an ununiform solution was formed.

Comparative Example 7

Comparative Example 6 was repeated except that diethanolamine was replaced with 136 g of p-isopropylphenol.

The hydroxyl value of the resulting resin was 194 mg-KOH/g, and the nonvolatile matter of the resin solution was 59.6% by weight.

The preparation of a coating composition was then tried in the same manner as described in Example 34 using the polyol resin solution described above. However, the polyol resin and the white tar component exhibited phase separation, and thus it is impossible to prepare the coating composition.

**Claims**

1. A polyol resin which is obtained by reaction of a bisphenol epoxy resin (a) as defined hereinafter with at least two out of the undermentioned components,

(i) at least one main chain extender (b) selected from primary amines, said extender (b) being capable of bringing about main chain extension reaction of said bisphenol type epoxy resin (a),

(ii) at least one active hydrogen containing compound (c) selected from among secondary amines, phenols and carboxylic acids, said compound (c) being capable of bringing about ring opening reaction of the terminal epoxy group of said bisphenol epoxy resin (a), and

(iii) at least one univalent caboxylic acid (d) capable of esterifying the hydroxyl group of said bisphenol epoxy resin;

said resin (a) being of the general formula (I)

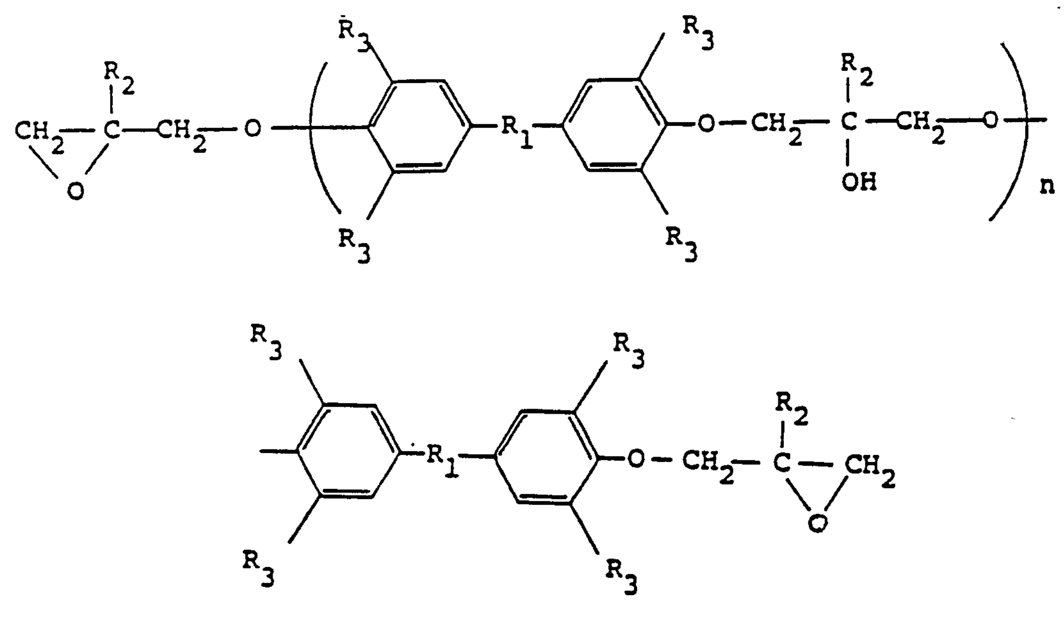

(I)

wherein $R_1$ represents

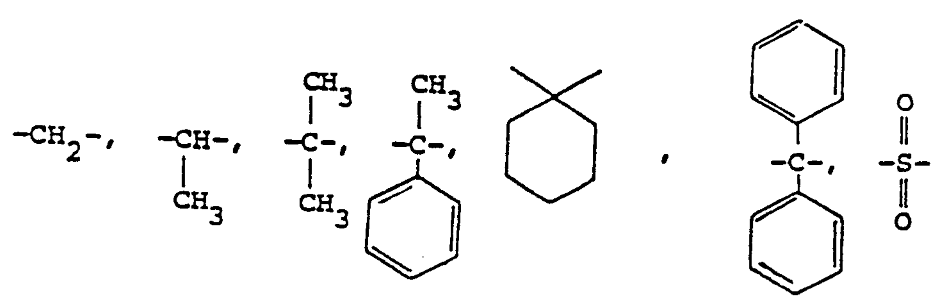

or -O-;

$R_2$ represents a hydrogen atom or a methyl group; $R_3$ represents a hydrogen or halogen atom, and n

represents a number of repeating units and n can be zero, and $R_1$, $R_2$ and $R_3$ may individually be the same or different.

2. The polyol resin according to claim 1 wherein the main chain extender (b) selected from primary amines is an alkyl-containing primary amine.

3. The polyol resin according to claim 2 wherein the alkyl-containing primary amine is n-butylamine, n-octylamine or n-cetylamine.

4. The polyol resin according to any preceding claim wherein the active hydrogen containing compond (c) is a secondary amine.

5. The polyol resin according to claim 4 wherein the secondary amine is an alkanol amine such as diethanolamine, diisopropanolamine, dipentanolamine, N-methylethanolamine, N-ethylpropanolamine, and N-ethanolamine.

6. The polyol resin according to any of claims 1 to 3 wherein the active hydrogen containing compound (c) is a univalent phenol or univalent alkyl-containing phenol.

7. The polyol resin according to any preceding claim wherein the univalent carboxylic acid is propionic acid, capric acid, palmitic acid, stearic acid, castor oil fatty acid, undecylenic acid, dehydrated castor oil fatty acid, linolic acid, linolenic acid or tall oil fatty acid.

8. The polyol resin according to any of claims 1 to 6 wherein the polyol resin is a polyol resin obtained by reacting the bisphenol type epoxy resin (a) with the main chain extender (b) and then reacting the resulting reaction product with the active hydrogen containing compound (c).

9. The polyol resin according to any of claims 1 to 7 wherein said polyol resin is a polyol resin obtained by reacting the bisphenol epoxy resin (a) with the main chain extended (b) and then reacting the resulting reaction product with the active hydrogen containing compound (c) and the univalent carboxylic acid (d).

10. The polyol resin according to any of claims 1 to 6 wherein said polyol resin is a polyol resin obtained by reacting the bisphenol epoxy resin (a) simultaneously with the main chain extender (b) and the active hydrogen containing compound (c).

11. The polyol resin according to any of claims 1 and 4 to 7 wherein said polyol resin is a polyol resin obtained by reacting the bisphenol type epoxy resin (a) with the active hydrogen containing compound (c) and then reacting the resulting reaction product with the univalent carboxylic acid (d).

12. A coating composition comprising a polyol resin [A] and a hydrocarbon resin [B], said polyol resin [A] is a resin obtained by reacting a bisphenol epoxy resin (a) as defined hereinafter with at least two out of the undermentioned components,

(i) at least one main chain extender (b) selected from primary amines, said extender (b) being capable of bringing about main chain extension reaction of said bisphenol epoxy resin (a).

(ii) at least one active hydrogen containing compound (c) selected from among secondary amines, phenols and carboxylic acids, said compound (c) being capable of bringing about ring opening reaction of the terminal epoxy group of said bisphenol epoxy resin (a), and

(iii) at least one univalent carboxylic acid capable of esterifying the hydroxyl group of said bisphenol epoxy resin; said resin (a) being of the general formula (I)

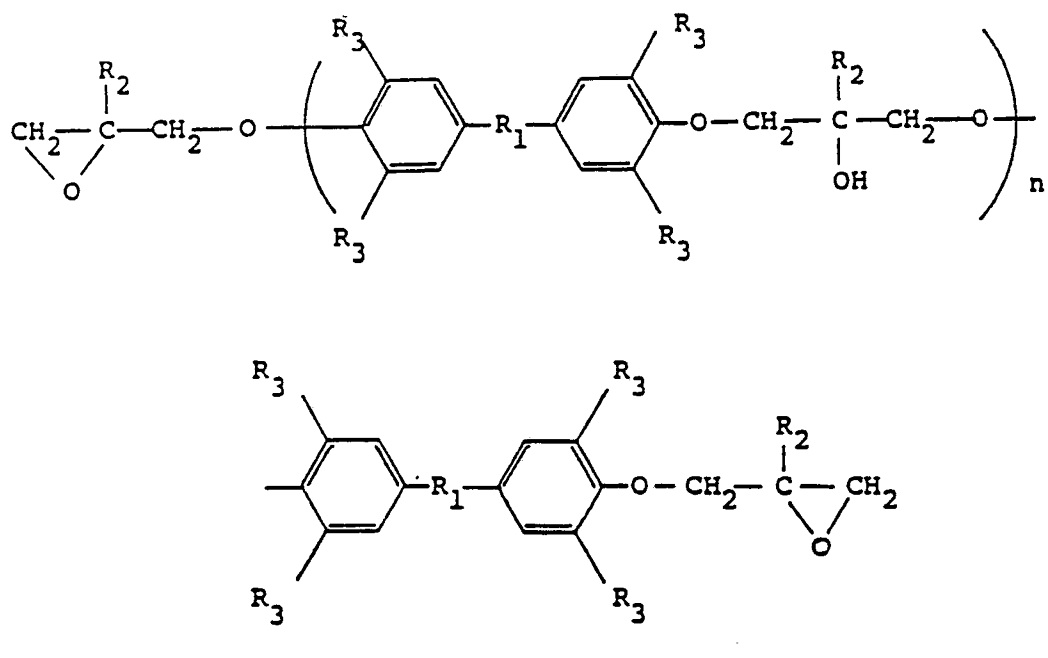

(I)

wherein $R_1$ represents

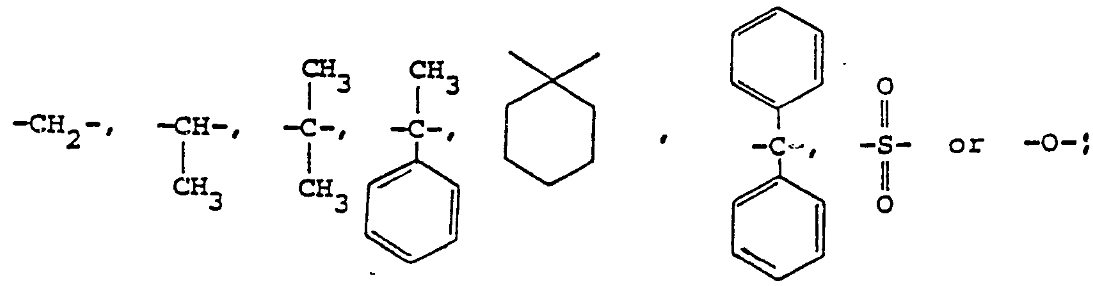

or

represents a hydrogen atom or a methyl group, $R_3$ represents a hydrogen or halogen atom, and n represents a number of repeating units and n can be zero, and $R_1$, $R_2$ and $R_3$ may individually be the same or different.

13. The coating composition according to claim 12 wherein the polyol resin [A] is a resin obtained by reacting a bisphenol epoxy resin (a) with an active hydrogen containing compound (c) and then reacting the resulting reaction product with a univalent carboxylic acid (d).

14. The coating composition according to claim 12 or claim 13 wherein the active hydrogen containing compound (c) is a secondary amine.

15. The coating composition according to claim 14 wherein the secondary amine is alkanol amine such as diethanolamine, diisopropanolamine, dipentanolamine, N-methylethanolamine, N-ethylpropanolamine, and N-ethylethanolamine.

16. The coating composition according to any of claims 12 to 16 wherein the univalent carboxylic acid (d) is propionic acid, capric acid, palmitic acid, stearic acid, castor oil fatty acid, undecylenic acid, dehydrated castor oil fatty acid, linolic acid, linolenic acid or tall oil fatty acid.

17. The coating composition according to any of claims 12 to 16 wherein the hydrocarbon resin [B] is a condensate of monomers consisting essentially of alkylbenzenes and formaldehyde, a condensate of monomers consisting essentially of ketones and formaldehyde, a condensate of monomers consisting essentially of coumarone and formaldehyde, or a polymer of monomers consisting essentially of unsaturated hydrocarbons.

**Patentansprüche**

1. Polyolharz, erhalten durch Umsetzung eines Bisphenolepoxyharzes (a), wie nachstehend definiert, mit zumindest zwei der nachstehenden Komponenten,

(i) zumindest einem Hauptkettenverlängerer (b), ausgewähalt unter primären Aminen, wobei der Verlängerer (b) in der Lage ist, eine Hauptkettenverlängerungsreaktion des Epoxyharzes (a) vom Bisphenol-Typ zu bewirken,

(ii) einer zumindest ein aktives Wasserstoffatom enthaltenden Verbindung (c), ausgewählt unter sekundären Aminen, Phenolen und Carbonsäuren, wobei die Verbindung (c) in der Lage ist, eine Ringöffnungsreaktion der endständigen Epoxygruppe des Bisphenolepoxyharzes (a) zu bewirken, und

(iii) zumindest einer einwertigen Carbonsäure (d), die in der Lage ist, die Hydroxylgruppe des Bisphenolepoxyharzes zu verestern,

wobei das Harz (a) die allgemeine Formel (I)

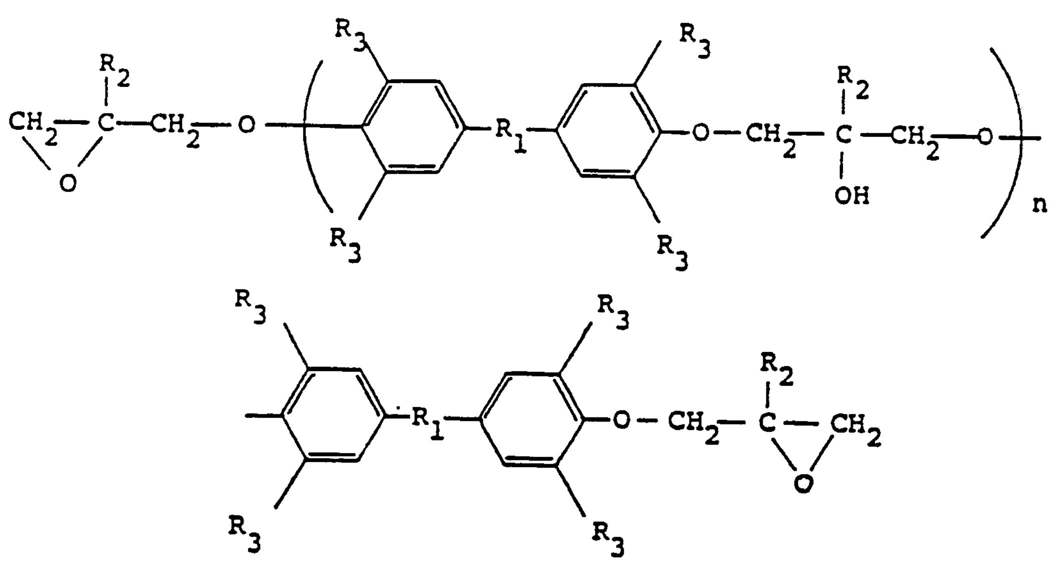

(I)

besitzt, worin $R_1$ für

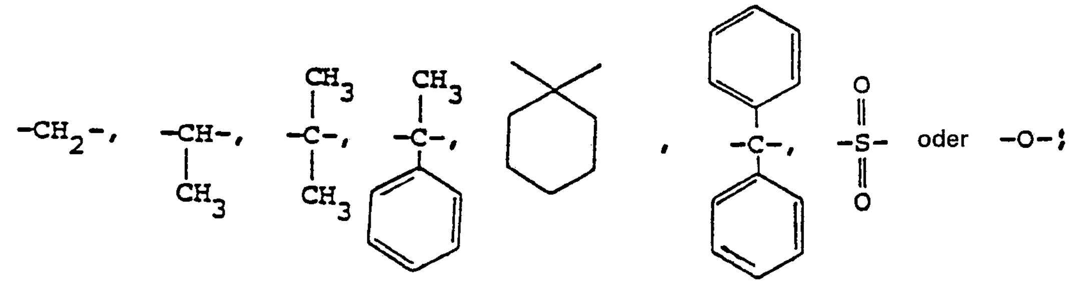

oder

steht, $R_2$ ein Wasserstoffatom oder eine Methylgruppe bedeutet, $R_3$ für ein Wasserstoffatom oder ein Halogenatom steht, und n die Anzahl der sich wiederholdenden Einheiten angibt, und n null sein kann, und $R_1$, $R_2$ und $R_3$ unabhängig gleich oder voneinander verschieden sein können.

2. Polyolharz gemäß Anspruch 1, worin der Hauptkettenverlängerer (b), ausgewählt unter primären Aminen, ein Alkyl-enthaltendes primäres Amin ist.

3. Polyolharz gemäß Anspruch 2, worin das Alkylenthaltende primäre Amin n-Butylamin, n-Octylamin oder n-Cetylamin ist.

4. Polyolharz gemäß einem der vorhergehenden Ansprüche, worin die das aktive Wasserstoffatom enthaltende Verbindung (c) ein sekundäres Amin ist.

5. Polyolharz gemäß Anspruch 4, worin das sekundäre Amin ein Alkanolamin wie Diethanolamin, Diisopropanolamin, Dipentanolamin, N-Methylethanolamin, N-Ethylpropanolamin und N-Ethanolamin ist.

6. Polyolharz gemäß einem der Ansprüche 1 bis 3, worin die aktiven Wasserstoff enthaltende Verbindung (c) ein einwertiges Phenol oder ein einwertiges Alkyl-enthaltendes Phenol ist.

7. Polyolharz gemäß einem der vorhergehenden Ansprüche, worin die einwertige Carbonsäure Propionsäure, Caprinsäure, Palmitinsäure, Stearinsäure, Rizinusölfettsäure, Undecylensäure, dehydratisierte Rizinusölfettsäure, Linolsäure, Linolensäure oder Tallölfettsäure ist.

8. Polyolharz gemäß einem der Ansprüche 1 bis 6, worin das Polyolharz ein Polyolharz ist, erhalten durch Umsetzung des Epoxyharzes (a) vom Bisphenol-Typ mit dem Hauptkettenverlängerer (b) und anschließende Umsetzung des entstandenen Reaktionsprodukts mit der aktiven Wasserstoff enthaltenden Verbindung (c).

9. Polyolharz gemäß einem der Ansprüche 1 bis 7, worin das Polyolharz ein Polyolharz ist, erhalten durch Umsetzung des Bisphenolepoxyharzes (a) mit dem Haputkettenverlängerer (b) und anschließende Umsetzung des entstandenen Reaktionsprodukts mit der aktiven Wasserstoff enthaltenden Verbindung (c) und der einwertigen Carbonsäure (d).

10. Polyolharz gemäß einem der Ansprüche 1 bis 6, worin das Polyolharz ein Polyolharz ist, erhalten durch Umsetzung des Bisphenolepoxyharzes (a) gleichzeitig mit dem Hauptkettenverlängerer (b) und der aktiven Wasserstoff enthaltenden Verbindung (c).

11. Polyolharz gemäß einem der Ansprüche 1 und 4 bis 7, worin das Polyolharz ein Polyolharz ist, erhalten durch Umsetzung des Epoxyharzes (a) vom Bisphenol-Typ mit der aktiven Wasserstoff enthaltenden Verbindung (c) und anschließende Umsetzung des entstandenen Reaktionsprodukts mit der einwertigen Carbonsäure (d).

12. Überzugszusammensetzung, enthaltend ein Polyolharz [A] und ein Kohlenwasserstoffharz [B], wobei das Polyolharz [A] ein Harz ist, erhalten durch Umsetzung eines Bisphenolepoxyharzes (a), wie nachstehend definiert, mit zumindest zwei der nachstehenden Komponenten,

(i) zumindest einem Hauptkettenverlängerer (b), ausgewählt unter primären Aminen, wobei der Verlängerer (b) in der Lage ist, eine Hauptkettenverlängerungsreaktion des Bisphenolepoxyharzes (a) zu bewirken,

(ii) zumindest einer aktiven Wasserstoff enthaltenden Verbindung (c), ausgewählt unter sekundären Aminen, Phenolen und Carbonsäuren, wobei die Verbindung (c) in der Lage ist, eine Ringöffnungsreaktion der endständigen Epoxygruppe des Bisphenolepoxyharzes (a) zu bewirken, und

(iii) zumindest einer einwertigen Carbonsäure, die in der Lage ist, die Hydroxylgruppe des Bisphenolepoxyharzes zu verestern,

wobei das Harz (a) die allgemeine Formel (I)

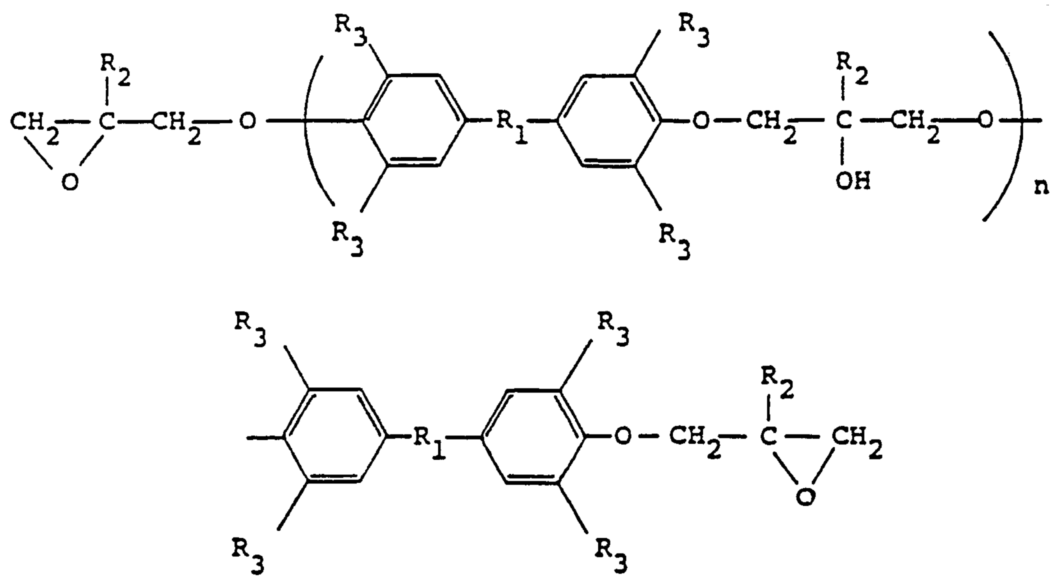

(I)

besitzt, worin $R_1$ für

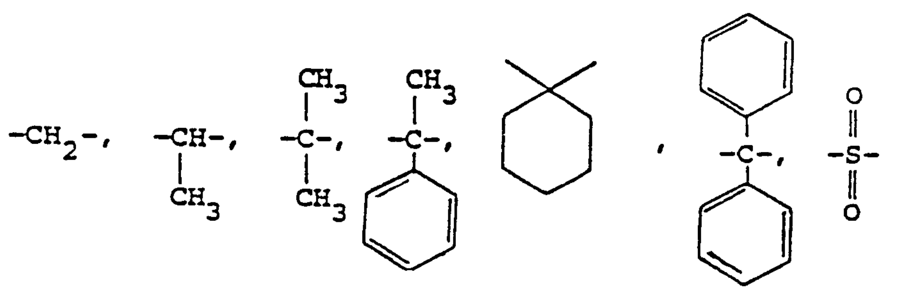

oder –O–;

steht, $R_2$ ein Wasserstoffatom oder eine Methylgruppe bedeutet, $R_3$ für ein Wasserstoff oder ein Halogenatom steht, und n die Anzahl der sich wiederholenden Einheiten angibt, und n Null sein kann, und $R_1$, $R_2$ und $R_3$ unabhängig gleich oder voneinander verschieden sein können.

13. Überzugszusammensetzung gemäß Anspruch 12, worin das Polyolharz [A] ein Harz ist, erhalten durch Umsetzung eines Bisphenolepoxyharzes (a) mit einer aktiven Wasserstoff enthaltenden Verbindung (c) und hiernach Umsetzung des entstandenen Reaktionsprodukts mit einer einwertigen Carbonsäure (d).

14. Überzugszusammensetzung gemäß Anspruch 12 oder Anspruch 13, worin die aktiven Wasserstoff enthaltende Verbindung (c) ein sekundäres Amin ist.

15. Überzugszusammensetzung gemäß Anspruch 14, worin das sekundäre Amin ein Alkanolamin wie Diethanolamin, Diisopropanolamin, Dipentanolamin, N-Methylethanolamin, N-Ethylpropanolamin und N-Ethylethanolamin ist.

16. Überzugszusammensetzung gemäß einem der Ansprüche 12 bis 16, worin die einwertige Carbonsäure (d) Propionsäure, Caprinsäure, Palmitinsäure, Stearinsäure, Rizinusölfettsäure, Undecylensäure, dehydratisierte Rizinusölfettsäure, Linolsäure, Linolensäure oder Tallölfettsäure ist.

17. Überzugszusammensetzung gemäß einem der Ansprüche 12 bis 16, worin das Kohlenwasserstoffharz [B] ein Kondensat von im wesentlichen aus Alkylbenzolen und Formaldehyd bestehenden Monomeren, ein Kondensat von im wesentlichen aus Ketonen und Formaldehyd bestehenden Monomeren, ein Kondensat aus im wesentlichen aus Cumaron und Formaldehyd bestehenden Monomeren oder ein Polymeres von im wesentlichen aus ungesättigten Kohlenwasserstoffen bestehenden Monomeren ist.

**Revendications**

1. Résine de polyol obtenue par réaction d'une résine époxy de bisphénol (a) comme défini ci-après avec au moins deux des composants mentionnés ci-dessous,

(i) au moins un agent d'allongement de chaîne principale (b) choisi parmi les amines primaires, cet agent d'allongement (b) étant capable de provoquer une réaction d'allongement de la chaîne principale de ladite résine époxy de bisphénol (a),

(ii) au moins un composé (c) contenant un atome d'hydrogène actif choisi pami les amines

secondaires, les phénols et les acides carboxyliques, ledit composé (c) étant capable de provoquer une réaction d'ouverture de cycle du groupe époxy terminal de ladite résine époxy de bisphénol (a) et

(iii) au moins un acide carboxylique univalent (d) capable d'estérifier le groupe hydroxyle de ladite résine époxy de bisphénol;

ladite résine (a) répondant à la formule générale (I)

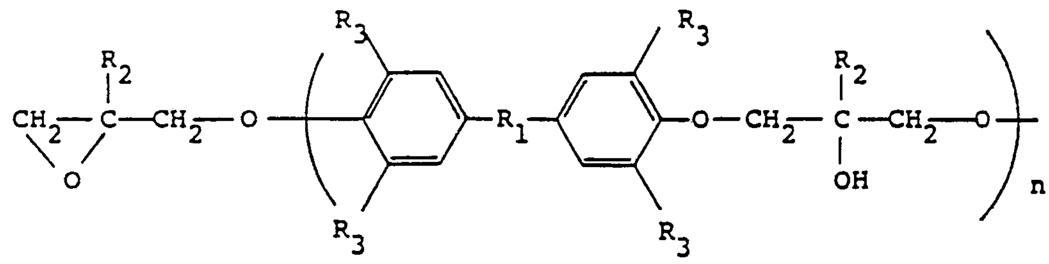

(I)

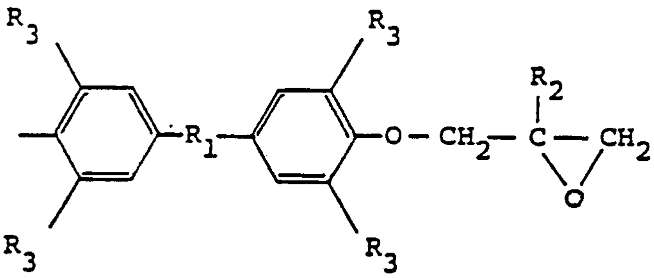

dans laquelle $R_1$ représente

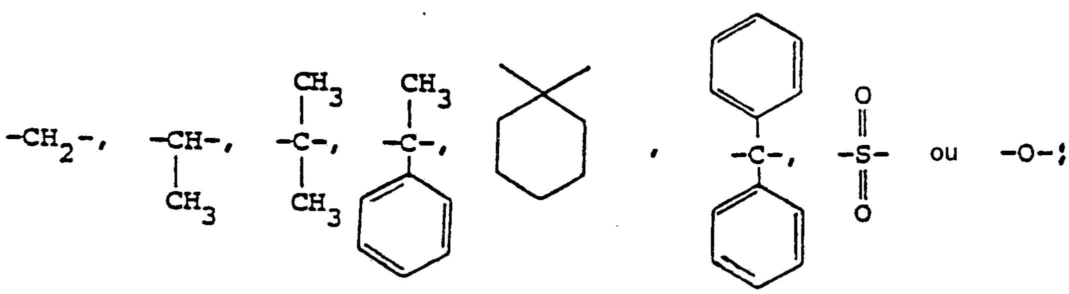

ou

$R_2$ représente un atome d'hydrogène ou un groupe méthyle; $R_3$ représente un atome d'hydrogène ou d'halogène et n représente un nombre dfe motifs répétés et n peut être zéro, et $R_1$, $R_2$ et $R_3$ peuvent individuellement être semblables ou différents.

2. Résine de polyol selon la revendication 1, dans laquelle l'agent d'allongement de chaîne principale (b) choisi parmi les amines primaires est une amine primaire contenant un groupe alkyle.

3. Résine de polyol selon la revendication 2, dans laquelle l'amine primaire contenant un groupe alkyle esdt la n-butylamine, la n-octylamine ou la n-cétylamine.

4. Résine de polyol selon l'uen quelconque des revendications précédentes, dans laquelle le composé contenant un atome d'hydrogène actif (c) est une amine secondaire.

5. Résine de polyol selon la revendication 4, dans laquelle l'amine secondaire est une alcanolamine, telle que la diéthanolamine, la diisopropanolamine, la dipentanolamine, la N-méthyléthanolamine, la N-éthylpropanolamine et la N-éthanolamine.

6. Résine de polyol selon l'une quelconque des revendications 1 à 3, dans laquelle le composé contenant un atome d'hydrògene actif (c) est n phénol univalent ou un phénol univalent contenant un groupe alkyle.

7. Résine de polyol selon l'une quelconque des revendications précédentes, dans laquelle l'acide carboxylique univalent est l'acide propionique, l'acide caprique, l'acide palmitique, l'acide stéarique, l'acide gras d'huile de ricin, l'acide undécylénique, l'acide gras d'huile de ricin déshydratée, l'acide linolique, l'acide linolénique ou l'acide gras de tall-oil.

8. Résine de polyol selon l'une quelconque des revendications 1 à 6 qui est une résine de polyol obtenue par réaction de la résine époxy de bisphénol (a) avec l'agent d'allongement de chaîne principale (b), puis réaction du produit réactionnel obtenu avec le composé contenant un hydrogène actif (c).

9. Résine de polyol selon l'une quelconque des revendications 1 à 7 qui est une résine de polyol obtenue par réaction de la résine époxy de bisphénol (a) avec l'agent d'allongement de chaîne principale

(b), puis réaction du produit réactionnel obtenu avec le composé contenant un atome d'hydrogène actif (c) et l'acide carboxylique univalent (d).

10. Résine de polyol selon l'une quelconque des revendications 1 à 6 qui est obtenue par réaction de la résine époxy de bisphénol (a) simultnéement avec l'agent d'allongement de chaîne principale (b) et le composé contenant un atome d'hydrogène actif (c).

11. Résine de polyol selon l'une quelconque des revendications 1 et 4 à 7 qui et une résine de polyol obtenue par réaction de la résine époxy de bisphénol (a) avec le composé contenant un atome d'hydrogène actif (c), puis réaction du produit réactionnel obtenu avec l'acide carboxylique univalent (d).

12. Composition de revêtement comprenant une résine de polyol [A] et une résine hydrocarbonée [B], ladite résine de polyol [A] étant une résine obtenue par réaction d'une résine époxy de bisphénol (a) comme défini ci-après avec au moins deux des composants mentionnés ci-dessous,

(i) au moins un agent d'allongement de chaîne principale (b) choisi parmi les amines primaires, cet agent d'allongement (b) étant capable de provoquer une réaction d'allongement de la chaîne principale de ladite résine époxy de bisphénol (a),

(ii) au mons un composé (c) contenant un atome d'hydrogène actif choisi parmi les amines secondaires, les phénols et les acides carboxyliques, ledit composé (c) étant capable de provoquer une réaction d'ouverture de cycle du groupe époxy terminal de ladite résine époxyde de bisphénol (a) et

(iii) au moins un acide carboxylique univalent (d) capable d'estérifier le groupe hydroxyle de ladite résine époxy de bisphénol;

ladite résine (a) répondant à la formule générale (I)

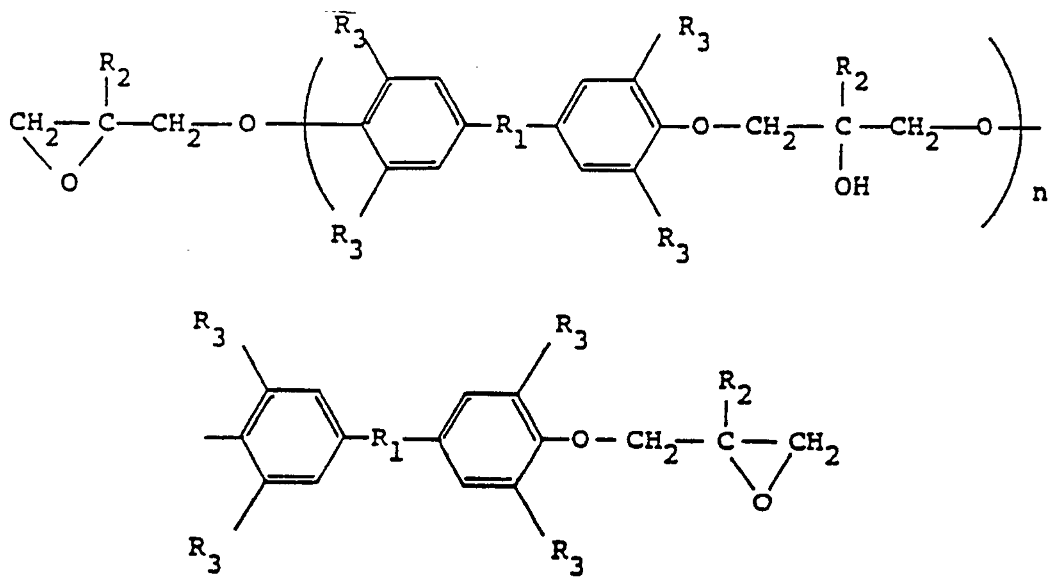

(I)

dans laquelle $R_1$ représente

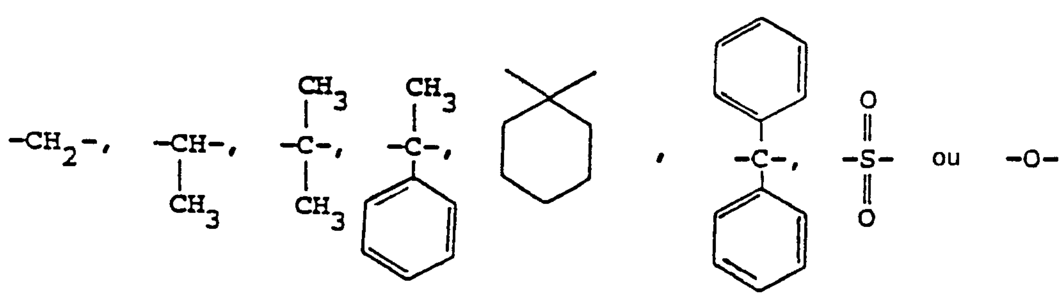

$R_2$ représente un atome d'hydrogène ou un groupe méthyle; $R_3$ représente un atome d'hydrogène ou d'halogène et n représente un nombre de motifs répétés et n peut être zéro, et $R_1$, $R_2$ et $R_3$ peuvent individuellement être semblables ou différents.

13. Composition de revêtement selon la revendication 12, dans laquelle la résine de polyol [A] est une résine obtenue par réaction d'une résine époxy de bisphénol (a) avec un composé contenant un atome d'hydrogène actif (c), puis réaction du produit réactionnel obtenu avec un acide carboxylique univalent (d).

14. Composition de revêtement selon la revendication 12 ou la revendication 13, dans laquelle le composé contenant un hydrogène actif (c) est une amine secondaire.

15. Composition de revêtement selon la revendication 14, dans laquelle l'amine secondaire est une

alcanolamine, telle que la diéthanolamine, la diisopropanolamine, la dipentanolamine, la N-méthyléthanolamine, lka N-éthylpropanolamine et la N-éthyléthanolamine.

16. Composition de revêtement selon l'une quelconque des revendications 12 à 16, dans laquelle l'acide carboxylique univalent (d) est l'acide propionique, l'acide caprique, l'acide palmitique, l'acide stéarique, l'acide gras d'huile de ricin, l'acide undécylénique, l'acide gras d'huile de ricin déshydratée, l'acide linolique, l'acide linolénique ou l'acide gras de tall-oil.

17. Composition de revêtement selon l'une quelconque des revendications 12 à 16, dans laquelle la résine hydrocarbonée [B] est un condensat de monomères constitués essentiellement d'alkylbenzènes et de formaldéhyde, un condensat de monomères constitués essentiellement de cétones et de formaldéhyde, un condensat de monomères constitués essentiellement de coumarone et de formaldéhyde ou un polymère de monomères constitués essentiellement d'hydrocarbures insaturés.